# EUROPÄISCHE PATENTSCHRIFT

(11) **EP 0 973 417 B1**
(45) Veröffentlichungstag und Bekanntmachung des Hinweises auf die Patenterteilung: **02.06.2004**
(21) Anmeldenummer: 98910733.9
(22) Anmeldetag: 06.03.1998
(51) Int. Cl.: A23P 1/00, A23L 1/216, A23L 1/217

(54) **VERFAHREN ZUM REHYDRIEREN VON SPEISEGRANULAT UND WASSER SOWIE VORRICHTUNG ZUR DURCHFÜHRUNG DES VERFAHRENS**
METHOD FOR REHYDRATING FOOD GRANULES AND WATER AND DEVICE FOR PERFORMING SAID METHOD
PROCEDE DE REHYDRATATION DE GRANULES ALIMENTAIRES, EAU ET DISPOSITIF CORRESPONDANT

(30) Priorität: 06.03.1997 DE 19709196; 18.11.1997 DE 19751066
(43) Veröffentlichungstag der Anmeldung: 26.01.2000
(73) Patentinhaber: Aichele, Erich, 71083 Herrenberg (DE); Vollmer, Manfred, 82041 Deisenhofen (DE)
(72) Erfinder: AICHELE, Erich, D-71083 Herrenberg (DE); VOLLMER, Manfred, D-82041 Deisenhofen (DE); HENGE, Christian, D-76137 Karlsruhe (DE); HÖHNE, Manfred, D-76135 Karlsruhe (DE); VÖLKER, Bernd, Georg, Jakob, D-76332 Bad Herrenalb (DE)
(74) Vertreter: Schaumburg, Thoenes & Thurn
(86) Internationale Anmeldenummer: PCT/EP1998/001302
(87) Internationale Veröffentlichungsnummer: WO 1998/038877

(56) Entgegenhaltungen:
- US-A- 3 855 913
- US-A- 4 093 125
- US-A- 4 438 683
- US-A- 5 197 376
- US-A- 5 272 961
- US-A- 5 307 736
- US-A- 5 605 091

## Beschreibung

Die Erfindung betrifft ein Verfahren nach dem Oberbegriff des Patentanspuchs 1. Ferner betrifft die Erfindung eine Vorrichtung gemäß dem Oberbegriff des Patentanspruchs 8 bzw. 13 zur Durchführung des Verfahrens.

Ein Verfahren zum Rehydrieren von Speisegranulat kommt insbesondere bei Verkaufsautomaten oder Automaten für Großküchen zur Anwendung, die aus Wasser und einem rehydrierbaren Speisegranulat einen Speiseteig erzeugen, der zu Speiseteigstückchen umgeformt, anschließend fritiert, gekocht, gebraten oder gebacken wird. Bei diesem bekannten, in derartigen Automaten eingesetzten Verfahren wird eine portionierte Menge Speisegranulat in eine Kammer eingefüllt und anschließend mit einer einem vorgegebenen Mischungsverhältnis entsprechenden Menge Wasser rehydriert.

Als Speisegranulat eignet sich jedes rehydrierbare Granulat, das mit Wasser zu einem Speiseteig aufgeschlämmt werden kann. So kann beispielsweise für die Herstellung eines rohen Kartoffelteiges rehydrierbares Kartoffelgranulat oder für die Herstellung von Nudelteig ein Gemisch aus Mehl und Stärke verwendet werden. Um den individuellen Geschmackswünschen der Benutzer entgegenzukommen, können dem Speisegranulat ferner Gewürze und Gewürzmischungen beigemengt werden. Um das Durchmischen des Speisegranulats mit Wasser zu beschleunigen, kann das Wasser auf eine Temperatur von 80 bis 90°C erwärmt werden.

So beschreibt die US Patentschrift 5 307 736 einen Verkaufsautomaten für Pommes frites, der nach dem eingangs genannten Verfahren aus rehydrierbarem Kartoffelgranulat und Wasser einen, Kartoffelteig erzeugt. Als Kammer für die Rehydrierung wird ein Extrusionsbecher verwendet dessen unteres Ende als Austrittsöffnung dient und der nacheinander einer Rehydrierstation, einem Kompressionsstation und einer Extrussionsstation zugeführt wird. Er wird mit der gesamten vorgegebenen Menge Kartoffelgranulat befüllt, die dabei mit der vorgegebenen Wassermenge besprüht und rehydriert wird. Das Speisegranulat wird also beim Fallen in den Extrusionbecher rehydriert. Ein gleichmäßiges Durchfeuchten des Speisegranulats mit Wasser ist wegen der kurzen Fallzeit nicht gewährleistet.

Es ist Aufgabe der Erfindung, ein Verfahren zum Rehydrieren sowie eine Vorrichtung zur Durchführung des Verfahrens bereitzustellen, bei dem bzw. bei der eine vorgegebene Menge Speisegranulat mit einer vorgegebenen Menge Wasser gleichmaßig und vollstandig rehydriert wird.

Diese Aufgabe wird durch die Merkmale des Patentanspruchs 1 gelöst; wobei Ferner wird die Aufgabe durch eine Vorrichtung nach Patentanspruch 8 bzw. 13 gelöst. Vorteilhafte Weiterbildungen der Erfindung ergeben sich aus den jeweils zugeordneten Unteransprüchen.

Bei dem erfindungsgemäßen Verfahren wird zunächst nur eine Teilmenge der vorgegebenen Menge Speisegranulat in die Kammer eingefüllt. Die dabei entstandene erste Granulatschicht wird anschließend mit Wasser benetzt, das als Sprühregen in die Kammer eingesprüht wird. Der Sprühregen dringt bis in die untersten Teilschichten des locker aufgehäuften Speisegranulats ein und rehydriert sie. Mit zunehmender Rehydrierung des aufgehäuften Speisegranulats kann das Wasser trotz seiner Verteilung nicht mehr durch die rehydrierten oberen Teilschichten zu den unteren rehydrierten Teilschichten gelangen, sondern sammelt sich in den oberen Teilschichten. In diesem Verfahrenszustand wird weiteres Speisegranulat schichtweise auf die erste Granulatschicht aufgebracht und mit Wasser besprüht. Dabei nimmt das auf die erste Granulatschicht aufgebrachte Speisegranulat mit seinen an die oberen Teilschichten der ersten Granulatschicht angrenzenden unteren Teilschichten das in diesen gespeicherte Wasser auf. Gleichzeitig werden die oberen Teilschichten durch das zusätzlich eingesprühte Wasser rehydriert. Durch die Verteilung des Wassers als Sprühregen einerseits und das schichtweise Aufbringen des Speisegranulats andererseits wird so eine gleichmäßige Rehydrierung der gesamten vorgegebenen Menge Speisegranulat erzielt.

Bei Speisegranulat, das vergleichsweise schnell rehydriert, wird vorgeschlagen, nach jedem Aufbringen einer weiteren Granulatschicht diese mit Wasser zu besprühen. Dadurch ist sichergestellt, daß trotz der sich bildenden Sperrschichten aus rehydriertem Speisegranulat, die ein Eindringen des Wassers in tiefere Teilschichten verhindern, die Granulatschichten gleichmäßig durchfeuchtet werden.

Speisegranulat, das vergleichsweise langsam rehydriert, kann bereits beim Einfüllen mit Wasser besprüht werden. Hierzu wird Wasser auf das in die Kammer einfallende Speisegranulat und auf die entstehende Granulatschicht gesprüht. Auf diese Weise wird einerseits die eingefüllte Menge Speisegranulat gleichmäßig mit Wasser durchmischt, andererseits wird die für die gesamte vorgegebene Menge Speisegranulat erforderliche Rehydrierzeit verkürzt, da das Speisegranulat bereits während des Einfüllens rehydriert wird.

Bei einer bevorzugten Weiterbildung des Verfahrens wird das Wasser zumindest teilweise in Richtung normal zum Kammerboden eingespritzt, auf den das Speisegranulat aufbringbar ist. Dadurch wird sichergestellt, daß die gesamte Oberfläche des auf den Kammerboden aufgebrachten Speisegranulats mit Wasser benetzt wird.

Des weiteren besteht die Möglichkeit, das Wasser zumindest teilweise längs mindestens einer Tangentialebene an einem imaginären, in der Kammer stehenden Zylinder in eine Richtung einzuspritzen, die geneigt zur Normalen des Kammerbodens verläuft, auf den das Granulat aufbringbar ist. Durch das tangentiale Einspritzen des Wassers wird in der Kammer eine kreisförmige Strömung erzeugt, die das Speisegranulat mitreißt und es nicht nur rehydriert, sondern auch einer Rühr- bzw. Mischbewegung unterzieht.

Der Sprühregen sollte bei einem mittleren Wasserdruck von 2 bis 3 bar aus Tröpfchen bestehen, deren mittlerer volumetrischer Durchmesser in einem Bereich von 0,5 bis 1,5 mm liegt. Bei einer derartigen Tröpfchengröße wird insbesondere beim gleichzeitigen Einfüllen von Speisegranulat und Wasser einerseits eine gute Durchmischung des Wassers mit dem Speisegranulat erzielt, da das Speisegranulat ausreichend benetzt wird, andererseits durch die Tröpfchengröße die Flugbahn des Speisegranulats gezielt beeinflußt.

Zur Durchführung des Verfahrens eignet sich eine Vorrichtung nach Patentanspruch 8, bei der beabstandet zum Kammerboden, auf den das Speisegranulat aufbringbar ist, in der Kammer mindestens eine Düse zum Einspritzen des Wassers angeordnet ist, die einen sich in Strömungsrichtung verjüngenden Hohlraum hat und deren mit dem Hohlraum verbundene Düsenaustrittsöffnung in Richtung des Kammerbodens zeigt. Die Düsenaustrittsöffnung hat eine im Querschnitt spitzwinklige Abrißkante, die das ausströmende Wasser zerstäubt.

Zum Einsprühen des Wassers dient beispielsweise eine Einstoffdüse, in deren Hohlraum ein Dralleinsatz angeordnet ist, der eine axiale Bohrung und mehrere radial verlaufende Kanäle hat, durch die das Wasser in den Hohlraum kreisförmig einströmt. Das kreisförmig einströmende Wasser verursacht eine Kreisströmung im Hohlraum, wobei die axiale Bohrung deren Tangentialgeschwindigkeit verringert, so daß das Wasser als kegelförmiger Sprühregen aus der Düsenaustrittsöffnung gesprüht wird. Durch Druckregulierung des in die Einstoffdüse einströmenden Wassers kann zusätzlich die Größe der Tröpfchen des Sprühregens gesteuert werden. Ist der Wasserdruck gering, entsteht ein Sprühregen mit vergleichsweise großen Wassertropfen. Ist dagegen der Wasserdruck hoch, wird ein Sprühregen mit sehr kleinen Wassertropfen gebildet. Dadurch kann die Rehydrierzeit beeinflußt werden.

Ferner wird die Verwendung einer Mehrstoffdüse mit Außenmischung vorgeschlagen, die eine konzentrisch zur Düsenaustrittsöffnung für das Wasser angeordnete zweite Düsenaustrittsöffnung für ein unter Druck zugeführtes zweites Medium hat. Durch das zweite unter Druck zugeführte Medium wird das aus der ersten Düsenaustrittsöffnung strömende Wasser zu einem Sprühregen zerstäubt. In diesem Fall kann die Tröpfchengröße des Sprühregens gezielt beeinflußt werden, indem der Druck, mit dem das zweite Medium aus der zweiten Düsenaustrittsöffnung austritt, erhöht bzw. verringert wird. Aus Hygienegründen eignet sich als zweites Medium insbesondere Preßluft, Wasserdampf oder ein Gemisch aus Preßluft und Wasserdampf, das aus der zweiten Düsenaustrittsöffnung austritt. Ferner ist die Verwendung einer Mehrstoffdüse mit Innenmischung denkbar, bei der das Wasser und das zweite Medium in dem Düsenkörper zusammengeführt werden, wobei durch Regulierung der einströmenden Menge des zweiten Mediums die Wassermenge beeinflußt werden kann.

Die Kammer der Vorrichtung ist bei einer bevorzugten Ausführungsform als Zylinder mit symmetrischer, vorzugsweise kreisförmiger Querschnittsform ausgebildet, in dem die Düse konzentrisch angeordnet ist und das Wasser in Richtung der Längsachse des Zylinders einspritzt. Durch die symmetrische Form des Zylinders kommt es zu einer gleichmäßigen Verteilung des eingesprühten Sprühregens, der sich auf die Granulatschichten absenkt.

Zusätzlich kann im Zylinder ein in Längsrichtung des Zylinders verschieblicher Kolben vorgesehen sein, an dem die Düse befestigt ist. Mit diesem Kolben kann das im Zylinder rehydrierte Speisegranulat über eine Ausschiebeöffnung aus dem Zylinder geschoben und beispielsweise durch eine Formvorrichtung gedrückt werden. Ferner ist es möglich, den Abstand der Düse zur Oberfläche der jeweils eingefüllten Granulatschicht einzustellen, da die Düse am verschieblichen Kolben befestigt ist, so daß die Düse mit steigendem Speisegranulatpegel in der Kammer nach oben verfahren werden kann und ein gleichmäßiges Besprühen der gesamten Oberfläche der Granulatschicht zu jedem Verfahrenszeitpunkt sichergestellt ist.

Bei der Ausführungsform der Vorrichtung nach Patentanspruch 13 ist beabstandet zum Kammerboden, auf den das Speisegranulat aufbringbar ist, mindestens eine Düse derart angeordnet, daß das Wasser längs einer Tangentialebene an einem imaginären, in der Kammer angeordneten Zylinder eingespritzt wird. Bei dieser zweiten Ausführungsform wird das Speisegranulat nicht nur rehydriert, sondern durch das eine kreisförmige Strömung in der Mischkammer erzeugende tangentiale Einspritzen mitgerissen und eine Rühr- bzw. Mischbewegung verursacht.

Um die Kreisströmung des Speisegranulat-Wasser-Gemisches in der Kammer zu verstärken, kann das Wasser an mehreren Stellen der Kammer gleichzeitig oder auch zeitlich versetzt eingespritzt werden. Dazu können die Einspritzstellen an der Kammer in einer gemeinsamen radialen Ebene, vorzugsweise gleichmäßig über den Querschnitt der Kammer verteilt, angeordnet sein. Durch diese Art der Anordnung der Einspritzstellen, insbesondere eine gleichmäßige Verteilung über den Querschnitt der Kammer, wird das Speisegranulat an mehreren Stellen gleichmäßig in der Kammer in Bewegung versetzt, wobei die Bildung von Speisegranulatanhäufungen vermieden wird.

Bei einer weiteren vorteilhaften Ausbildung der zweiten Ausführungsform der Erfindung können die Einspritzstellen auch übereinander, d.h. in übereinander angeordneten radialen Ebenen ausgebildet sein, wodurch insbesondere bei großen Granulatmengen in der Kammer Kreisströmungen in den unterschiedlichen Granulatschichten erzeugt werden. Bei einer derartigen Anordnung der Einspritzstellen können die Wasserstrahlen der verschiedenen Einspritzebenen auch entgegengesetzt zueinander ausgerichtet sein, wodurch in unterschiedlichen Granulatschichten entgegengesetzte Kreisströmungen erzeugt werden, die das Vermischen des Speisegranulats mit dem eingespritzten Wasser verbessern.

Ferner ist es besonders vorteilhaft, wenn das Wasser zur Längsachse der Kammer geneigt eingespritzt wird. Durch das geneigte Einspritzen der Wasserstrahlen wird zusätzlich zur bereits beschriebenen Kreisströmung ein Durchmischen der verschiedenen Granulatschichten untereinander erreicht.

Bei einer Weiterbildung einer der beiden Vorrichtungen ist zum Einfüllen des Speisegranulats seitlich an der Kammer eine Rutsche angeordnet, die in einer an der Kammer ausgebildeten Einfüllöffnung mündet. Dabei ist die Rutsche vorzugsweise mit einem Winkel von 10 bis 20° zur Längsachse des Zylinders geneigt angeordnet. Eine derartige Rutsche eignet sich insbesondere zur Verwendung mit Speisegranulat, das vergleichsweise schnell rehydriert. Durch die steile Anordnung der Rutsche kann das Speisegranulat mit hoher Geschwindigkeit in die Kammer eingefüllt werden, wodurch ein Rehydrieren des Speisegranulats in der Rutsche verhindert wird.

Bei einer anderen Ausführungsform wird zum Einfüllen des Speisegranulats eine in die Kammer schwenkbare Rutsche verwendet, in deren Austrittsöffnung die Düse angeordnet ist. Diese schwenkbare Rutsche wird insbesondere dann eingesetzt, wenn das Speisegranulat bereits während des Einfüllens mit Wasser besprüht werden soll.

Bei einer bevorzugten Ausführungsform einer der beiden Vorrichtungen hat die zylinderförmige Kammer einen kreisförmigen Querschnitt und der Kolben einen Drehantrieb, der den Kolben um seine Längsachse drehen kann. An der Unterseite des Kolbens sind Erhebungen ausgebildet, mit denen das Speisegranulat-Wasser-Gemisch verrührt werden kann.

Ferner kann die Durchmischung des Speisegranulats mit dem eingespritzten Wasser verbessert werden, indem an der Kammer eine Heizvorrichtung vorgesehen ist. Durch die Heizvorrichtung wird die Kammer auf einen Temperaturbereich von 80 bis 90°C erwärmt, so daß das eingespritzte Wasser nicht abkühlt, sondern seine Temperatur von 80 bis 85°C beibehält und auf diese Weise besser in das feinporige Speisegranulat eindringt.

Als Verschluß für die Ausschiebeöffnung einer der beiden Vorrichtungen wird vorgeschlagen, eine außerhalb der Kammer gelagerte Schließplatte vorzusehen, die in der Plattenebene verschwenkbar ist. Die Schließplatte wird über einen eigenen Antrieb, beispielsweise einen Stellmotor bewegt. Um ein Durchbiegen der Schließplatte bei geschlossener Ausschiebeöffnung zu verhindern, wenn der Kolben den Speiseteig verdichtet, kann die Schließplatte im Bereich der Ausschiebeöffnung durch Rollen gestützt oder durch einen Verriegelungsmechanismus gehalten werden. Ist an der Kammer, wie oben bereits beschrieben, eine Heizvorrichtung vorgesehen, ist es ferner vorteilhaft, wenn die Schließplatte mit einer Heizung ausgerüstet ist, die die Schließplatte zumindest teilweise erhitzt, um ein Kondensieren von Wasser an der Schließplatte zu verhindern.

Anstelle einer verschwenkbaren Schließplatte ist auch die Verwendung einer Klappe oder eines Schiebers möglich.

Um die aus der Formvorrichtung austretenden Teigstreifen auf die gewünschte Länge zu kürzen, wird ferner vorgeschlagen, an der Kammer einen Teigschneider vorzusehen. Als Teigschneider eignet sich beispielsweise ein durch den Bereich der Ausschiebeöffnung, quer zu dieser bewegbarer Draht oder eine durch den Bereich der Ausschiebeöffnung bewegbare Messerschneide. Bei einer bevorzugten Ausführungsform ist der Teigschneider gemeinsam mit der Schließplatte durch den Bereich der Ausschiebeöffnung schwenkbar. Dadurch wird ermöglicht, daß für die Schließplatte und für den Teigschneider ein gemeinsamer Antrieb verwendet werden kann. Hat die Schließplatte die Ausschiebeöffnung freigegeben, steht der Teigschneider in Warteposition und schneidet die Teigstreifen, sobald der Antrieb der Schließplatte erneut aktiviert wird. Anstelle eines Teigschneiders, der unter der Ausschiebeöffnung mehrfach hin und her geschwenkt wird, können auch mehrere Teigschneider verwendet werden, die dann aufeinanderfolgend die Teigstreifen schneiden.

Ein Draht als Teigschneider kann zwischen einer an der Schwenkachse angeordneten Nabe der Schließplatte und einem radial von der Nabe abstehenden Steg gespannt sein. Anstelle eines Drahtes als Teigschneider kann auch eine radial von der Nabe abstehende Messerschneide verwendet werden. In einer bevorzugten Ausführungsform ist der Teigschneider in Form einer Messerschneide an der Umlaufkante der Schließplatte ausgebildet.

Im folgenden werden zwei Ausführungsformen einer Vorrichtung zum Durchführen des erfindungsgemäßen Verfahrens an Hand der Zeichnung näher erläutert. Darin zeigen:
- Fig. 1: eine schematische Darstellung einer ersten Ausführungsform einer Vorrichtung zur Durchführung des erfindungsgemäßen Verfahrens in Vorderansicht,
- Fig. 2: eine schematische Darstellung der ersten Ausführungsform der Vorrichtung in Seitenansicht,
- Fig. 3: eine schematische Darstellung der ersten Ausführungsform der Vorrichtung in Draufsicht,
- Fig. 4: eine Draufsicht auf eine an der Vorrichtung nach Fig. 1 vorgesehene Schließplatte,
- Fig. 5: einen Schnitt entlang der Schnittlinie A-A der Schließplatte nach Fig. 4,
- Fig. 6: ein Blockschaltdiagramm der Vorrichtung nach Fig. 1,
- Fig. 7a bis 7d: Ablaufdiagramme, in denen die Arbeitsweise der Vorrichtung nach Fig. 1 dargestellt ist,
- Fig. 8: eine Prinzipdarstellung der Wirkungsweise der eingespritzten Wassertropfen auf die erste Granulatschicht,
- Fig. 9: eine Prinzipdarstellung der Wirkungsweise der eingespritzten Wassertropfen bei gleichzeitigem Einfüllen von Wasser und Granulat,
- Fig. 10: eine schematische Darstellung einer Rutsche für Speisegranulat,
- Fig. 11: eine schematische Darstellung der Rutsche nach Fig. 10 mit eingesetztem Prallblech,
- Fig. 12: eine schematische Darstellung einer S-förmigen Rutsche für Speisegranulat,
- Fig. 13: eine schematische Darstellung einer schwenkbaren Rutsche für Speisegranulat,
- Fig. 14: eine schematische Darstellung einer konzentrisch im Zylinder der Vorrichtung nach Fig. 1 angeordneten Rutsche für Speisegranulat,
- Fig. 15: eine schematische Darstellung einer zweiten Ausführungsform einer konzentrisch angeordneten Rutsche für Speisegranulat,
- Fig. 16: eine schematische Darstellung einer zweiten Ausführungsform einer Vorrichtung zur Durchführung des erfindungsgemäßen Verfahrens,
- Fig. 17: eine schematische Darstellung der Vorrichtung nach Fig. 16 in Seitenansicht,
- Fig. 18: eine Schnittansicht einer Einspritzdüse, die in der Vorrichtung nach Fig. 16 verwendet wird, und
- Fig. 19: eine Draufsicht auf die Einspritzdüse nach Fig. 18.

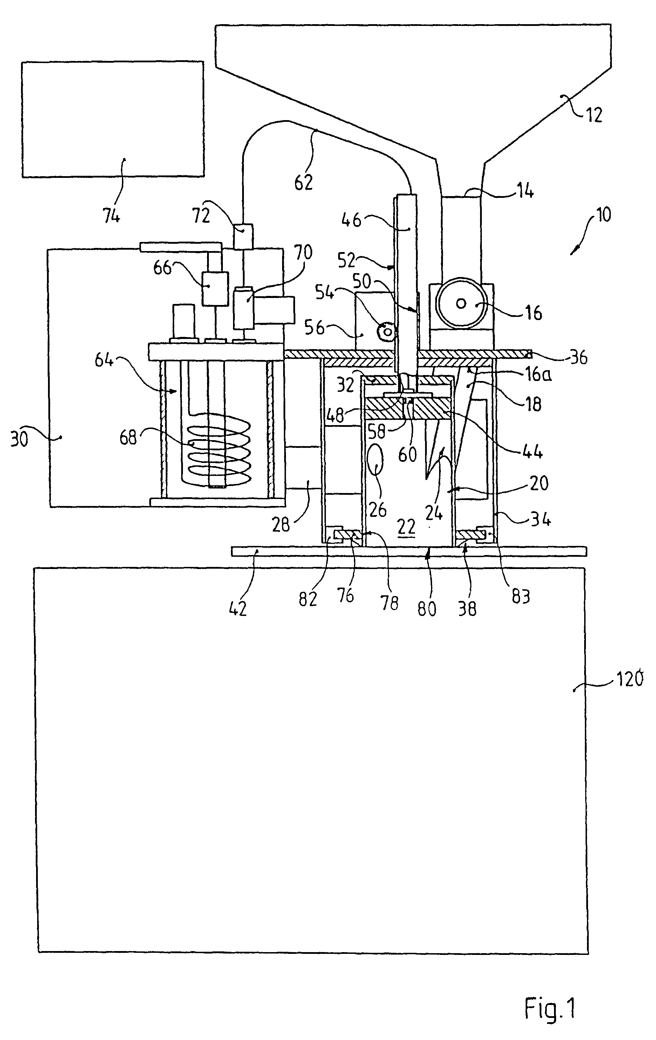

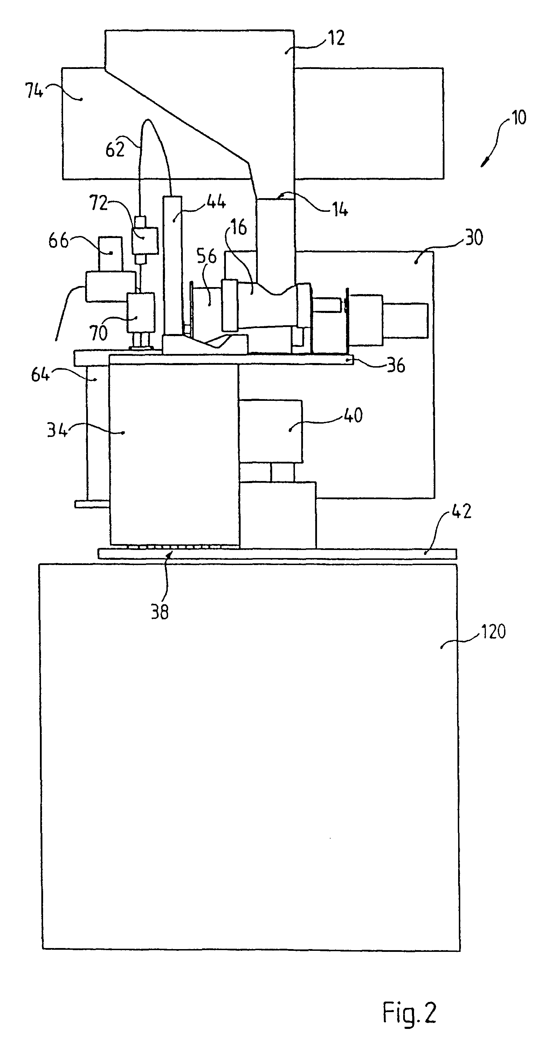

Die Fig. 1 und 2 zeigen in schematischer Darstellung eine erste Ausführungsform einer Vorrichtung 10, die nach dem erfindungsgemäßen Verfahren Speisegranulat rehydriert und in einem Verkaufsautomaten für Pommes frites eingesetzt ist. Die Vorrichtung 10 hat einen mit rehydrierbaren Kartoffelgranulat gefüllten Granulatbehälter 12, der vor Inbetriebnahme des Verkaufsautomaten mit Kartoffelgranulat gefüllt wird. Am in Fig. 1 rechts dargestellten unteren Ende des Granulatbehälters 12 ist an einer Austrittsöffnung 14 eine Förderschnecke 16 befestigt. Die Förderschnecke 16 steht ihrerseits mit ihrer Austrittsöffnung 16a über eine Granulatrutsche 18 mit einer Kammer 20 in Verbindung.

Die Kammer 20 hat einen senkrecht stehenden, an beiden Enden offenen Hohlzylinder 22 mit kreisförmigem Querschnitt, der aus Edelstahl gefertigt ist. In seiner Mantelfläche hat der Hohlzylinder 22 eine Einfüllöffnung 24, in der die Granulatrutsche 18 mündet. Ferner ist an der Mantelfläche auf Höhe der Einfüllöffnung 24 dieser gegenüberliegend eine Ansaugöffnung 26 ausgebildet, die über einen Ansaugstutzen 28 mit einer Luftansaugvorrichtung 30 in Verbindung steht. An seinem oberen offenen Ende ist der Zylinder 22 mit einem Deckel 32 verschlossen.

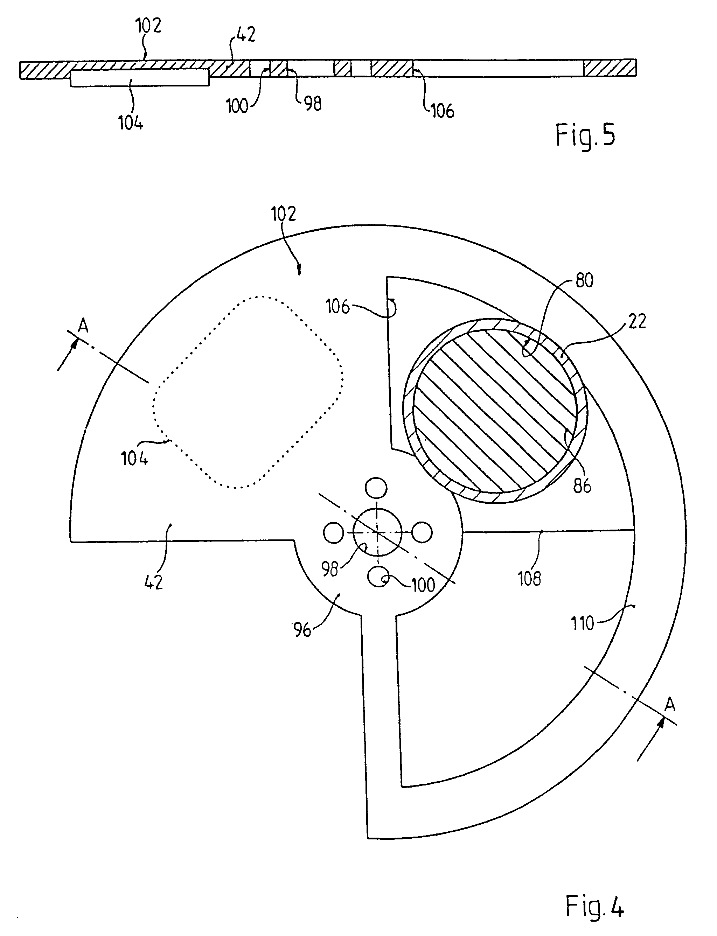

Die Granulatrutsche 18, der Hohlzylinder 22 und der Ansaugstutzen 28 sind in einem Gehäuse 34 mit rechteckiger Querschnittsform angeordnet. Das Gehäuse 34 ist an seiner Oberseite mit einer Abdeckung 36 verschlossen, auf der die Förderschnecke 16 mit dem Granulatbehälter 12 befestigt ist. Am unteren, offenen Ende des Gehäuses 34 ist eine Formvorrichtung 38 angeordnet, deren Aufbau und Funktion später erläutert wird. Wie Fig. 2 zeigt, ist an der Mantelfläche des Gehäuses 34 ein Drehantrieb 40 befestigt, an dessen Unterseite eine Schließplatte 42 mit integrierter Schneideeinrichtung (nicht dargestellt) drehbar gelagert ist, die in den Fig. 4 und 5 noch näher erläutert wird.

In dem Zylinder 22 ist ein in Richtung seiner Längsachse verfahrbarer Kolben 44 angeordnet, dessen hohle Kolbenstange 46 in einer am Deckel 32 ausgebildeten Führungsbohrung 48 aufgenommen ist, durch eine Öffnung an der Abdeckung 36 ragt und in einer an dieser befestigten, senkrecht nach oben stehenden Führung 50 geführt ist. An der Kolbenstange 44 ist eine Verzahnung 52 ausgebildet, die mit dem Ritzel 54 eines auf der Abdeckung 36 befestigten Kolbenantriebs 56 in Eingriff steht.

Der Kolben 44 hat eine konzentrisch angeordnete Durchgangsbohrung 58, in die eine Einstoffdüse 60 eingeschraubt ist. Die Einstoffdüse 60 steht über eine in der hohlen Kolbenstange 46 geführte Leitung 62 mit einem Wasserbehälter 64 in Verbindung. Am Wasserbehälter 64 ist ein Absperrventil 66 vorgesehen, über das Frischwasser mit einem Leitungsdruck von etwa 4 bar in den Wasserbehälter einströmen kann. Das Wasser im Wasserbehälter 64 wird durch eine in diesem befestigte Heizwendel 68 auf die Betriebstemperatur von etwa 85°C erwärmt. Durch Öffnen eines Magnetventils 70 am Wasserbehälter 64 strömt das Wasser über das Magnetventil 70 durch die Leitung 62 in die Einstoffdüse 60. Dabei wird die in die Einstoffdüse 60 einströmende Wassermenge mittels eines in der Leitung 62 angeordneten Durchflußmessers 72 bestimmt. Die von dem Durchflußmesser 72 bestimmte Wassermenge wird über Signalleitungen (nicht dargestellt) an eine Steuerung 74 weitergeleitet, die ihrerseits über Signalleitungen (nicht dargestellt) die Förderleistung der Förderschnecke 16 in Abhängigkeit von der eingespritzten Wassermenge reguliert.

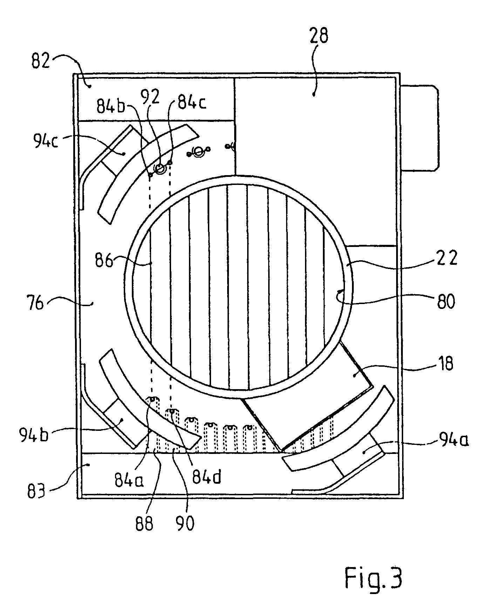

Nahe dem unteren offenen Ende des Zylinders 22 ist an diesem eine Drahtspannplatte 76 befestigt, mit der der Zylinder 22 im Gehäuse 34 gehalten wird und die Bestandteil der Formvorrichtung 38 ist, wie nachfolgend unter Bezugnahme auf die Fig. 1 und 3 näher erläutert wird. Die Drahtspannplatte 76 hat eine Aufnahmeöffnung 78, mit der sie auf den Zylinder 22 aufgeschoben und an der sie mit dem Zylinder 22 nahe dessen als Ausschiebeöffnung 80 dienenden offenen Ende verschweißt ist. An zwei ihrer Seitenkanten ist die Drahtspannplatte 76 in einander gegenüberliegend im Gehäuse 34 befestigte Führungsschienen 82 und 83 eingeschoben. Durch diese Art der Befestigung kann der Zylinder 22 auf einfache Weise aus dem Gehäuse 34 aus- und in das Gehäuse 34 eingebaut werden.

Wie Fig. 3 zeigt, sind konzentrisch um die Ausschiebeöffnung 80 an der Drahtspannplatte 76 mehrere Spannbohrungen 84 ausgebildet, zwischen denen mehrere mit Teflon beschichtete Drahtabschnitte 86 gespannt sind. Dabei bildet ein Drahtabschnitt 86 zwei über die Ausschiebeöffnung 80 gespannte Spanndrähte, indem er durch je vier Spannbohrungen 84a, 84b, 84c und 84d geführt ist. Hierzu ist der Drahtabschnitt 86 mit seinem einen Ende in der ersten Spannbohrung 84a durch eine Schraube 88 fixiert. Von der Spannbohrung 46 ausgehend ist der Drahtabschnitt 86 über die Ausschiebeöffnung 80 gespannt, durch die Spannbohrungen 84b und 84c geführt, wieder zurück über die Ausschiebeöffnung 80 gespannt und mit seinem anderen Ende in der vierten Spannbohrung 84d aufgenommen, in der er wiederum über eine Schraube 90 fixiert ist. Zwischen den beiden benachbarten Spannbohrungen 84b und 84c ist eine Spannschraube 92 eingeschraubt, die mit ihrer Stirnseite nach oben aus der Drahtspannplatte 76 ragt und dabei den über die Stirnseite geführten Drahtabschnitt 86 spannt.

Wie in Fig. 3 weiter gezeigt ist, sind gleichmäßig um den Zylinder 22 drei Heizeinrichtungen 94a, 94b und 94c mit Abstand zu diesem im Gehäuse 34 befestigt. Mit Hilfe der Heizeinrichtungen 94a, 94b und 94c wird der Zylinder 22 auf eine Betriebstemperatur von 80 bis 90°C erwärmt, damit das eingespritzte Wasser seine Temperatur von 80 bis 85°C beibehält und besser in das feinporige Speisegranulat eindringen kann. Mit der Heizeinrichtung 94a wird zusätzlich die im Querschnitt rechteckige Granulatrutsche 18 erwärmt, so daß an ihr kondensiertes Wasser verdampft und eine Verschmutzung der Granulatrutsche 18 durch an ihr anhaftenden rehydrierten Granulatstaub verhindert wird.

In Fig. 4 ist die Schließplatte 42 in Draufsicht dargestellt. Die Schließplatte 42 ist kreissegmentförmig und hat in ihrer Mitte eine Nabe 96, in der eine Zentrierbohrung 98 ausgebildet ist. Konzentrisch um die Zentrierbohrung 98 sind vier Durchgangsbohrungen 100 ausgebildet. Zum Befestigen am Drehantrieb 40 wird die Schließplatte 42 mit der Zentrierbohrung 98 auf die Abtriebswelle des Drehantriebs 40 gesteckt und mit in den Durchgangsbohrungen 100 aufgenommenen Schrauben an einem an der Antriebswelle vorgesehenen Flansch verschraubt.

Die Schließplatte 42 hat, wie in Fig. 4 links dargestellt, einen Verschlußabschnitt 102. Dieser Verschlußabschnitt 102 kann, wie Fig. 5 zeigt, mittels einer an der Unterseite der Schließplatte 42 im Bereich des Verschlußabschnittes 102 befestigten Heizeinrichtung 104 erwärmt werden. Die Oberseite des Verschlußabschnittes 102 ist mit Teflon beschichtet. Wie in Fig. 4 gezeigt, schließt sich an den Verschlußabschnitt 102 eine etwa halbkreisflächenförmige Durchgangsöffnung 106 an, deren Abstand zwischen den halbkreisförmigen Umlaufkanten etwa dem Durchmesser der Ausschiebeöffnung 80 des in Fig. 4 geschnitten dargestellten Zylinders 22 entspricht. Symmetrisch zur Durchgangsöffnung 106 ist ein radialer Schneidedraht 108 zwischen der Nabe 96 und einem äußeren Randabschnitt 110 der Schließplatte 42 über die Durchgangsöffnung 106 gespannt. Dieser Schneidedraht 108 dient, wie später noch erläutert wird, als Teigschneider.

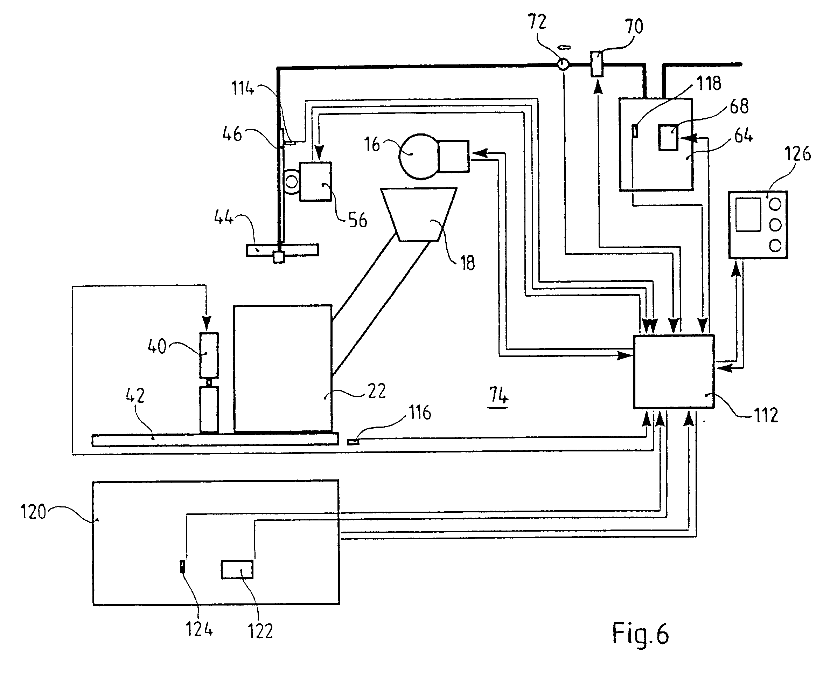

Fig. 6 zeigt ein Blockschaltbild der Steuerung 74, mit der die Vorrichtung 10 betrieben wird. Die Steuerung 74 hat eine zentrale Recheneinheit 112, die mit dem Antrieb der Förderschnecke 16, dem Kolbenantrieb 56 und dem Drehantrieb 40 der Schließplatte 42 über Signalleitungen verbunden ist. Mittels eines am Antrieb der Förderschnecke 16 befestigten Drehzahlsensors (nicht dargestellt) erfaßt die zentrale Recheneinheit 112 die Förderleistung und damit die in den Zylinder 22 über die Granulatrutsche 18 einzufüllende Granulatmenge. Am Kolbenantrieb 56 ist ein Kraftsensor (nicht dargestellt) vorgesehen, mit dem die zentrale Recheneinheit 112 die während des Verdichtens des Speiseteigs entstehende Kraft mißt, um den Kolbenantrieb 56 entsprechend einem vorgegebenen Wert anzusteuern. Ferner ist nahe dem Kolbenantrieb 56 ein erster Positionssensor 114 angeordnet, mit dem die Position der Kolbenstange 46 und damit die Position des Kolbens 44 erfaßt wird. Nahe der Schließplatte 42 ist ein zweiter Positionssensor 116 angeordnet, mit dem die unterschiedlichen Positionen der Schließplatte 42 während des Verdichtens und Teigschneidens erfaßt werden.

Des weiteren ist die zentrale Recheneinheit 112 mit der Wasseraufbereitung der Vorrichtung 10 verbunden. So erfaßt die zentrale Recheneinheit 112 über einen Temperatursensor 118 im Wasserbehälter 64 die Wassertemperatur und schaltet die Heizwendel 68 ein, sofern die Wassertemperatur unter einen vorgegebenen Wert fällt.

Schließlich steuert die zentrale Recheneinheit 112 auch noch eine unter der Schließplatte 42 angeordnete Friteuse 120, mit der die rohen Teigstückchen fritiert werden. Hierzu ist die zentrale Recheneinheit 112 mit einer Heizeinrichtung 122, mit der das in der Friteuse 120 befindliche Öl auf die erforderliche Fritiertemperatur von etwa 140°C erwärmt wird, sowie mit einem die Temperatur des Fritieröls messenden zweiten Temperatursensor 124 verbunden. Ferner steuert die zentrale Recheneinheit 112 den Transport der zu fritierenden Pommes frites in der Friteuse 120 sowie die Ausgabe der fritierten Pommes frites aus der Friteuse 120.

Die Steuerung 74 wird von einem Bedienfeld 126 betätigt, das über Leitungen mit der zentralen Recheneinheit 112 verbunden ist. Da die Vorrichtung 10 in einem Verkaufsautomaten verwendet wird, ist an der Vorrichtung 10 ferner ein Münzprüfer (nicht dargestellt) für den zu zahlenden Geldbetrag sowie eine Becherausgabeeinheit (nicht dargestellt) für die fertig fritierten Pommes frites vorgesehen, die beide gleichfalls mit der zentralen Recheneinheit 112 verbunden sind.

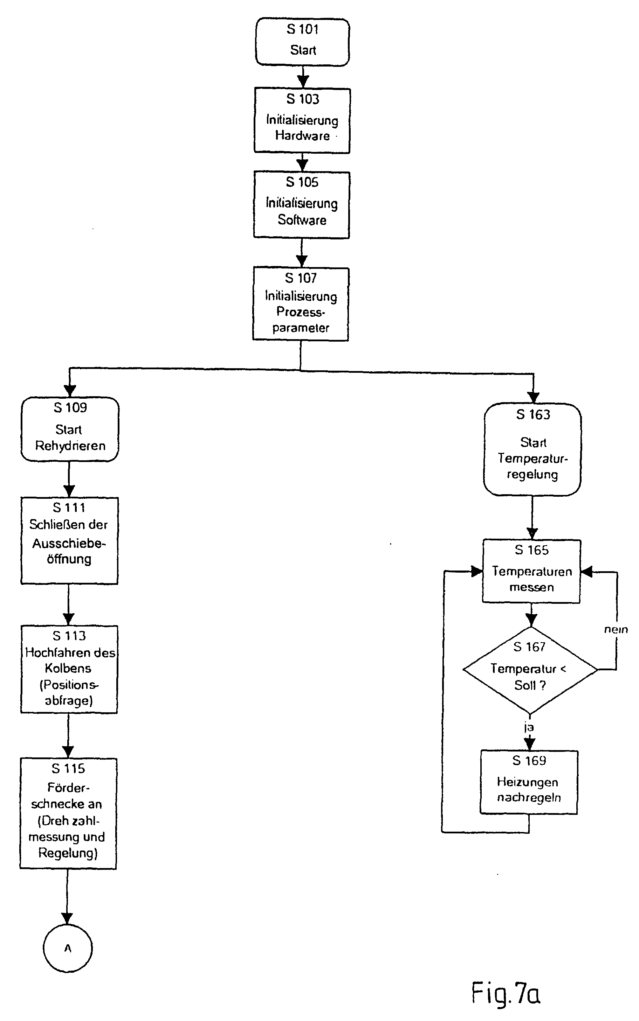

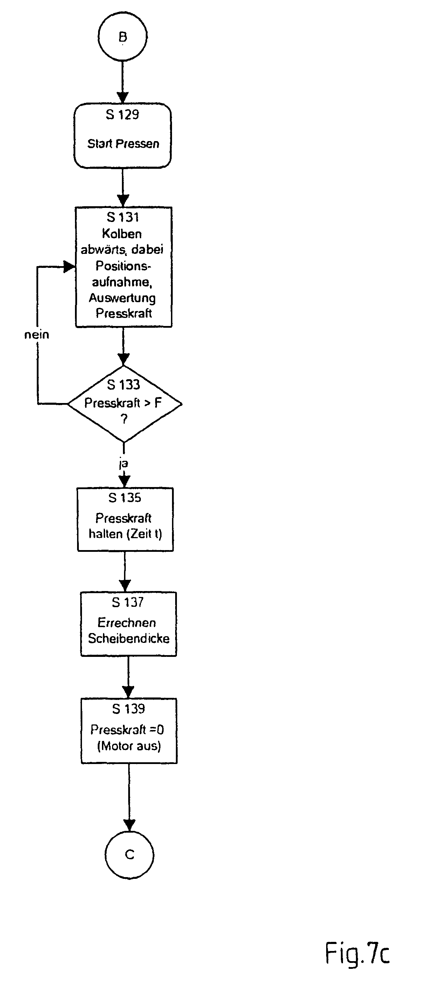

Nachfolgend wird die Funktionsweise der Vorrichtung 10 anhand der in den Fig. 7a bis 7d dargestellten Ablaufdiagramme näher erläutert. Sobald die Vorrichtung 10 beispielsweise durch Einzahlen eines Geldbetrages in den Münzprüfer (nicht dargestellt) aktiviert worden ist, wird sie in Schritt S101 gestartet. Während des Startvorganges werden in den Schritten S103 und S105 die Hardware und die Software initialisiert. Anschließend werden in Schritt S107 die Prozeßparameter wie beispielsweise die Wassertemperatur, die Granulatmenge, die Wassermenge und dergleichen aus einem ROM-Speicher (nicht dargestellt) in die zentrale Recheneinheit 112 eingelesen. Sobald die Initialisierungsvorgänge in den Schritten S103 bis S107 abgeschlossen sind, wird in Schritt S109 mit dem Rehydrieren und gleichzeitig in Schritt S163 mit der Temperaturregelungs-Routine begonnen. Bei der Temperaturregelungs-Routine wird in vorgegebenen Zeitabständen in Schritt 165 durch den ersten Temperatursensor 118 die Wassertemperatur und durch den zweiten Temperatursensor 124 die Fritieröltemperatur gemessen, die in Schritt 167 mit entsprechend vorgegebenen Sollwerten verglichen werden. Entsprechen die Wasser- und die Öltemperatur dem Sollwert, kehrt die Routine wieder zu Schritt S165 zurück. Andernfalls fährt die Steuerung mit Schritt S169 fort, in dem die Heizeinrichtung 104 des Wasserbehälters 64 und/oder die Heizeinrichtung 122 der Friteuse 120 nachgeregelt wird. Auf diese Weise ist ein Temperatur-Regelkreis geschlossen, bei dem sowohl eine Wassertemperatur von etwa 80°C als auch eine Fritieröltemperatur von etwa 140°C während des Betriebes der Vorrichtung 10 sichergestellt ist.

Wie zuvor bereits erläutert, beginnt die Steuerung 74 der Vorrichtung 10 in Schritt S109 mit dem Rehydrieren. Hierzu wird zunächst in Schritt 111 die Position der Schließplatte 42 erfaßt und diese gegebenenfalls über den Drehantrieb 40 geschlossen. Anschließend wird in Schritt S113 der Kolben 44 in seine Ausgangsstellung bewegt, die gleichfalls von der zentralen Recheneinheit 112 erfaßt wird. Sobald dieser Vorgang abgeschlossen ist, startet die zentrale Recheneinheit 112 den Antrieb der Förderschnecke in Schritt S115, wobei ständig deren Drehzahl überwacht wird. Durch die Drehzahlmessung und die vorher in Schritt S107 initialisierten Prozeßparameter kann die zentrale Recheneinheit 112 die in den Zylinder 22 eingefüllte Granulatmenge genau bestimmen. Die Förderschnecke 16 wird so lange in Betrieb gehalten, bis eine erste vorgegebene Teilmenge Speisegranulat aus dem Granulatbehälter 12 über die Granulatrutsche 18 in den Hohlzylinder 22 gefüllt worden ist. Dann wird in Schritt S117 das Magnetventil 70 der Wasserversorgung geöffnet, so daß das auf die Betriebstemperatur erwärmte Wasser über die Leitung 72 und die Einstoffdüse 60 gleichzeitig mit dem weiter durch die Förderschnecke 16 geförderten Speisegranulat in den Zylinder 22 gelangt.

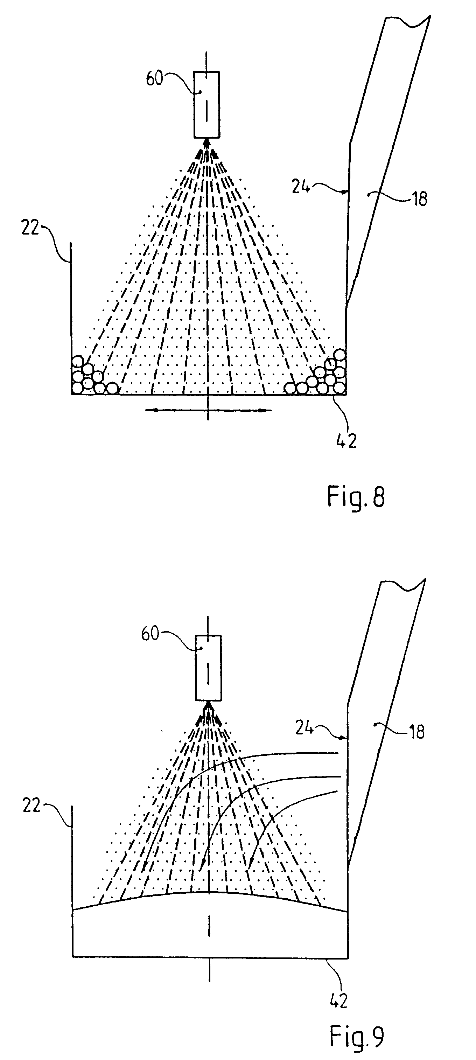

In Fig. 8 ist als Prinzipdarstellung die Wirkungsweise des eingespritzten Wassers auf die erste Granulatschicht gezeigt. Die erste Teilmenge des in den Zylinder 22 eingefüllten Granulats bildet auf dessen durch die Schließplatte 42 definiertem Boden eine erste Granulatschicht mit gleichmäßiger Dicke aus. Anschließend wird, wie zuvor erläutert, das Wasser durch die konzentrisch im Zylinder 22 angeordnete Einstoffdüse 60 als Sprühregen eingesprüht, dessen Tröpfchen einen mittleren volumetrischen Durchmesser von 0,5 bis 1,5 mm haben. Aufgrund der Geschwindigkeit der einzelnen Wassertropfen und deren jeweiliger Masse besitzen die Wassertropfen einen so hohen Impuls, daß das locker aufgeschichtete Granulat entlang der glatten Oberfläche der Schließplatte 42 von der Mitte des Zylinders 22 in Richtung dessen innerer Umfangsfläche weggespritzt wird, wie durch den Doppelpfeil in Fig. 8 angedeutet ist. Das sich an dem Spalt zwischen dem Zylinder 22 und der Schließplatte 42 anhäufende, mit Wasser versetzte Granulat rehydriert und bildet einen Ring aus Speiseteig, der den Spalt zwischen dem Zylinder 22 und der Schließplatte 42 abdichtet.

Beim weiterem gleichzeitigen Einfüllen von Speisegranulat und Wasser in den Zylinder 22 wird die Flugbahn des in den Zylinder 22 geförderten Granulats durch den Impuls des aus der Einstoffdüse 60 austretenden Wassers beeinflußt. Dieser Vorgang ist in Fig. 9 gezeigt, in der die Wirkungsweise des eingespritzten Wassers bei gleichzeitigem Einfüllen von Wasser und Granulat zu sehen ist. In diesem Fall wird durch den Impuls des durch die Einstoffdüse 60 eingespritzten Wassers die Flugbahn des gleichzeitig eingefüllten Granulats gezielt beeinflußt, damit das Granulat im Zylinder 22 gleichmäßig geschichtet ist. So kann durch gezieltes Einstellen der Tröpfchengröße, indem der Druck an der Einstoffdüse 60 verändert wird, das aus der Einfüllöffnung 24 austretende, in den Zylinder 22 einfallende Granulat durch den Impuls der Wassertropfen abgebremst und damit die Flugbahn des Granulats verändert werden, wie durch die Pfeile in Fig. 9 angedeutet ist.

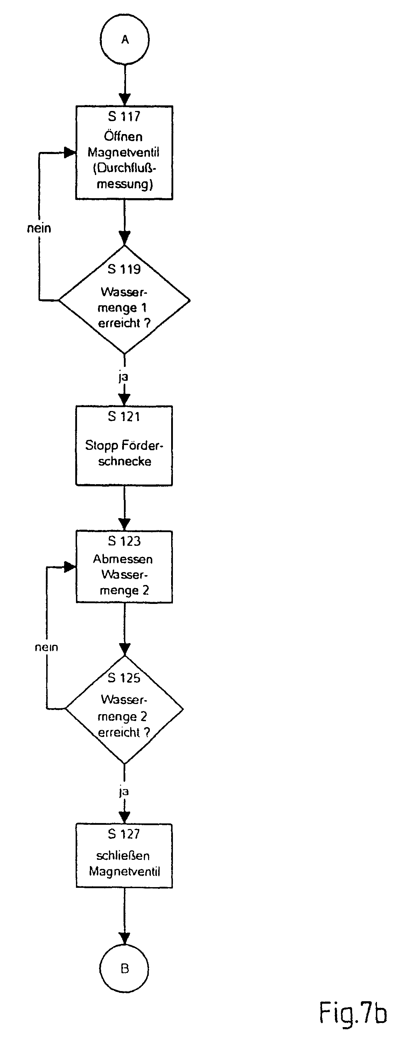

Wie in Fig. 7b in Schritt S119 gezeigt, wird regelmäßig durch die zentrale Recheneinheit 112 über den Durchflußmesser 72 bestimmt, ob die eingespritzte Wassermenge einen vorgegebenen Wert erreicht hat. Ist dies der Fall, wird in Schritt S121 die Förderschnecke 16 angehalten, während das Magnetventil 70 nach wie vor geöffnet bleibt, damit weiterhin Wasser in den Zylinder 22 eingesprüht wird, um das zuletzt eingefüllte Speisegranulat zu rehydrieren. Dabei mißt die zentrale Recheneinheit 112 in den Schritten S123 und S125 ständig die nach dem Stop der Förderschnecke 16 in den Zylinder eingefüllte Wassermenge. Sobald die Wassermenge einen zweiten vorgegebenen Wert erreicht hat, schließt sie in Schritt S127 das Magnetventil 70. Anschließend beginnt die Steuerung 74 in Schritt S129 mit dem Pressen des Speiseteigs.

Zum Pressen des Speiseteigs wird in Schritt S131 der Kolben 44 abwärts bewegt, wobei kontinuierlich die Preßkraft und die Position des Kolbens 44 erfaßt wird. In Schritt S133 wird die durch den Kraftsensor ermittelte Preßkraft mit einem vorgegebenen Wert verglichen. Sobald die ermittelte Preßkraft dem vorgegebenen Wert entspricht, stoppt die Steuerung 74 die Abwärtsbewegung des Kolbens 44 und hält diesen über eine vorgegebene Zeit t in der erreichten Position (Schritt S135). Dabei wird der Kolbenantrieb 56 jedoch nicht von der zentralen Recheneinheit 112 abgeschaltet. Er wird vielmehr mit einer Leistung betrieben, die ausreicht, um die erforderliche Preßkraft aufrecht zu erhalten. Während des Pressens berechnet die zentrale Recheneinheit 112 in Schritt S137 die später zu schneidende Scheibendicke und damit die Schichtanzahl n. Sobald die Zeit t abgelaufen ist, wird der Kolbenantrieb 56 ausgeschaltet, damit die Preßkraft 0 wird. Anschließend beginnt die Steuerung 74 in Schritt S 141 mit dem Formen.

Zum Formen öffnet die Steuerung 74 in Schritt S143 die Ausschiebeöffnung 80, indem die Schließplatte 42 in eine zweite Position geschwenkt wird, in der die in ihr ausgebildete Durchgangsöffnung 106 die Ausschiebeöffnung 80 des Zylinders 22 freigibt. Sobald die zentrale Recheneinheit 112 erfaßt, daß die Ausschiebeöffnung 80 freigegeben ist, wird in Schritt S145 der Kolben 44 nach unten bewegt, damit er den im Zylinder 22 befindlichen Speiseteig aus der Ausschiebeöffnung 80 durch die Formvorrichtung 38 hindurch ausschiebt. Dabei wird der durch die Ausschiebeöffnung 80 geschobene Speiseteig durch die Drahtabschnitte 86 in Teigscheiben geschnitten. Sobald der Kolben eine vorgegebene Wegstrecke abgesenkt worden ist, wird er angehalten und der Drehantrieb 40 in Schritt S147 erneut aktiviert, um die Schließplatte 42 weiterzudrehen. Dabei schneidet der in der Durchgangsöffnung 106 gespannte Schneidedraht 108 die Teigscheiben in Teigstreifen, die in die unter der Vorrichtung 10 angeordnete Friteuse 120 fallen, in der sie fritiert werden. Dieser Vorgang wird so lange wiederholt, bis die zentrale Recheneinheit 112 in Schritt S149 erfaßt, daß die vorletzte Schicht geschnitten worden ist. Anschließend wird in Schritt S151 durch den Kolben 44 die letzte Schicht aus der Ausschiebeöffnung 80 geschoben und mit der Schließplatte 42 abgeschnitten. Nach dem Schneiden der letzten Schicht ist in Schritt S155 die Herstellung der rohen Pommes frites beendet.

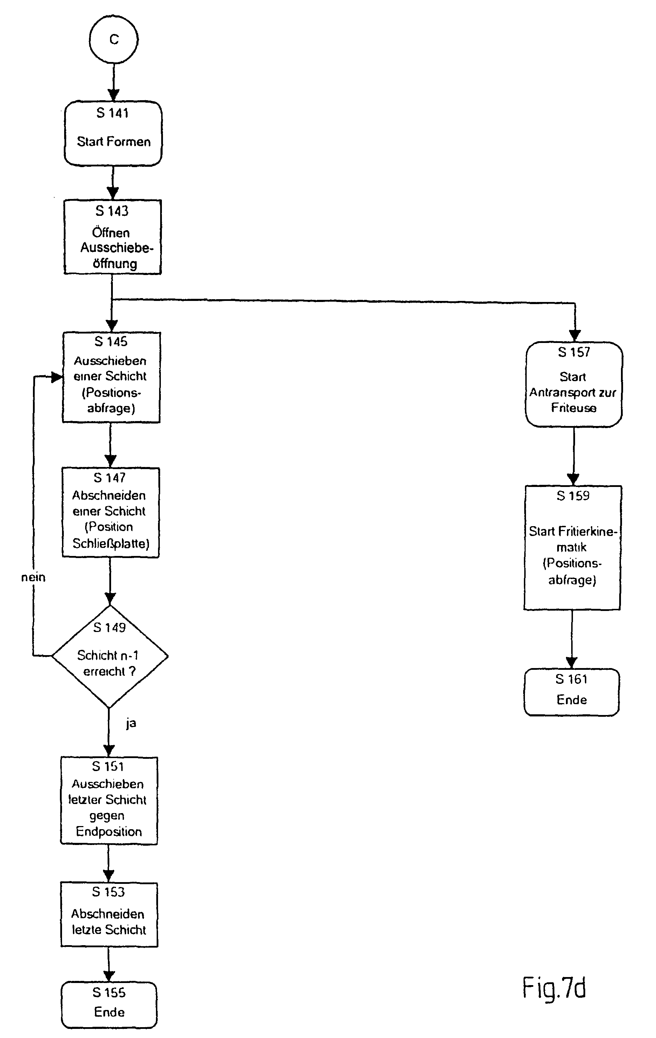

Wie Fig. 7d zeigt, wird in Schritt S157 der Transport in der Friteuse 120 angeschaltet, sobald in Schritt S143 die Ausschiebeöffnung 80 geöffnet worden ist. Anschließend wird in Schritt S159 die Fritierkinematik gestartet, mit der die zu fritierenden Pommes frites durch das Fritieröl transportiert werden und aus der Friteuse 120 ausgegeben werden. Nachdem die letzte Portion Pommes frites aus der Friteuse 120 an die Becherausgabe übergeben worden ist, wird der Fritiervorgang in Schritt S161 beendet. Sobald die zentrale Recheneinheit 112 zu Schritt S161 gelangt, wird die Vorrichtung 10 wieder in eine Ruhestellung geschaltet, in der sie auf eine erneute Inbetriebnahme wartet.

Anstelle bei der Vorrichtung 10 das Granulat gleichzeitig während des Einsprühens des Wassers in den Zylinder 22 einzufüllen, kann das Granulat auch schichtweise in den Zylinder 22 eingefüllt und jede Granulatschicht einzeln besprüht werden. Auch bei diesem Verfahren zum Rehydrieren sollte zunächst jedoch eine erste Granulatschicht im Zylinder 22 ausgebildet werden, um den Übergang zwischen dem Zylinder 22 und der Schließplatte 42 abzudichten.

Auch beim abwechselnden Einfüllen von Granulat und Wasser kann die durch den Impuls des eingespritzten Wassers verursachte Bewegung gezielt eingesetzt werden, um das Granulat zu durchmischen und einen gleichmäßigen Speiseteig zu erzeugen.

Nachfolgend werden unterschiedliche Rutschen beschrieben, die bei der Vorrichtung 10 oder auch bei der später noch zu erläuternden Vorrichtung mit tangentialer Einspritzung verwendet werden können.

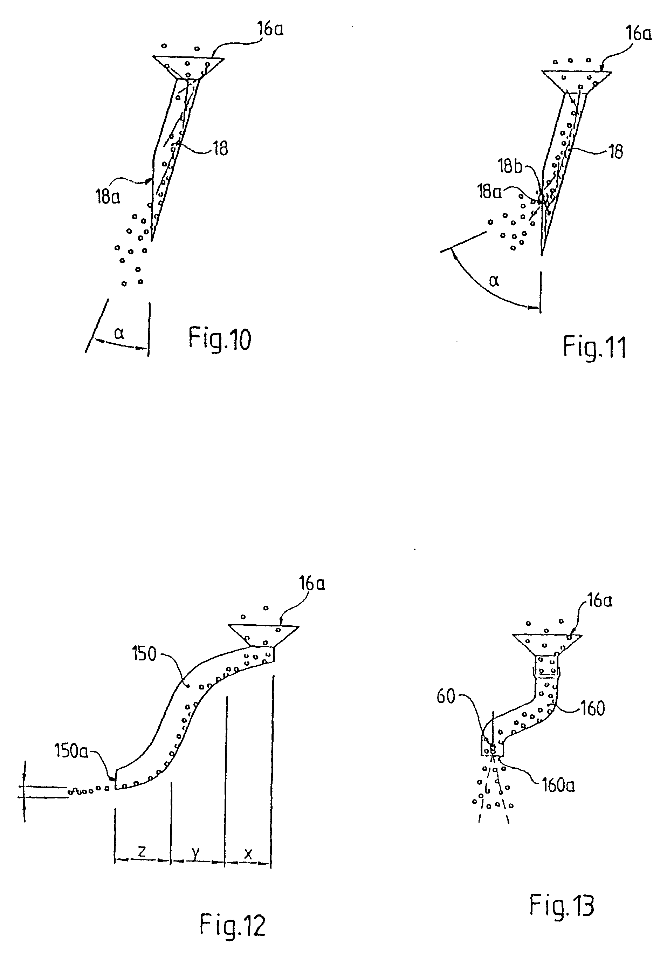

Fig. 10 zeigt die Granulatrutsche 18, die in der Zentraleinheit 10 eingesetzt wird. Die Granulatrutsche 18 ist etwa mit einem Winkel von 15° zur Längsachse des Zylinders 22 geneigt angeordnet. Durch den steilen Neigungswinkel der Granulatrutsche 18 fallen die einzelnen Granulatkörner in den Zylinder 22, wobei sie an der Innenwand der Granulatrutsche abprallen. Dabei entsteht ein Schüttwinkel α von beispielsweise 15 bis 20°.

Um den Schüttwinkel α zu vergrößern, wird, wie Fig. 11 zeigt, in der Granulatrutsche 18 zusätzlich ein Prallblech 18a befestigt, mit dem die Fallgeschwindigkeit der einzelnen Granulatkörner abgebremst wird. Das Prallblech 18a ist nahe der Austrittsöffnung 18b der Granulatrutsche 18 befestigt und ragt unter einem Winkel von etwa 10° in den Querschnitt der Granulatrutsche 18. Durch diese Maßnahme wird der Schüttwinkel α auf etwa 60° erweitert.

Fig. 12 zeigt eine abgewandelte S-förmige Granulatrutsche 150. Die Granulatrutsche 150 hat im eingebauten Zustand einen annähernd rechtwinklig zur Längsachse des Zylinders 22 verlaufenden Beruhigungsabschnitt x, der in einen mit einem Winkel von etwa 15° zur Längsachse des Zylinders 22 geneigten Beschleunigungsabschnitt y übergeht. Der Beschleunigungsabschnitt y geht in einen zum Beruhigungsabschnitt x parallelen Führungsabschnitt z über, der in die Austrittsöffnung 150a der Granulatrutsche 150 mündet. Bei der Granulatrutsche 150 wird das Granulat zunächst in der Beruhigungszone x abgebremst und gleitet dann mit erhöhter Geschwindigkeit entlang der Innenwand der Granulatrutsche 150 durch den Beschleunigungsabschnitt y. Der Führungsabschnitt z lenkt schließlich den Granulatstrom in die gewünschte Richtung.

Fig. 13 zeigt eine Granulatrutsche 160, die an der Austrittsöffnung 16a der Förderschnecke 16 schwenkbar gelagert ist. In der kreisförmigen Austrittsöffnung 160a der Granulatrutsche 160 ist zentrisch die Einstoffdüse 60 befestigt, mit der das Wasser in den Zylinder 22 eingesprüht wird. Wird nun Speisegranulat über die Granulatrutsche 160 in den Zylinder 22 eingefüllt, fällt es aus der Austrittsöffnung 160a und wird gleichzeitig durch die konzentrisch in der Austrittsöffnung 160a angeordnete Einstoffdüse 60 mit einem Wassersprühregen besprüht. Ist der Einfüllvorgang abgeschlossen, kann die im Zylinder 22 aufgebrachte Granulatschicht noch so lange mit Wasser besprüht werden, bis die für den Rehydriervorgang erforderliche Wassermenge erreicht ist.

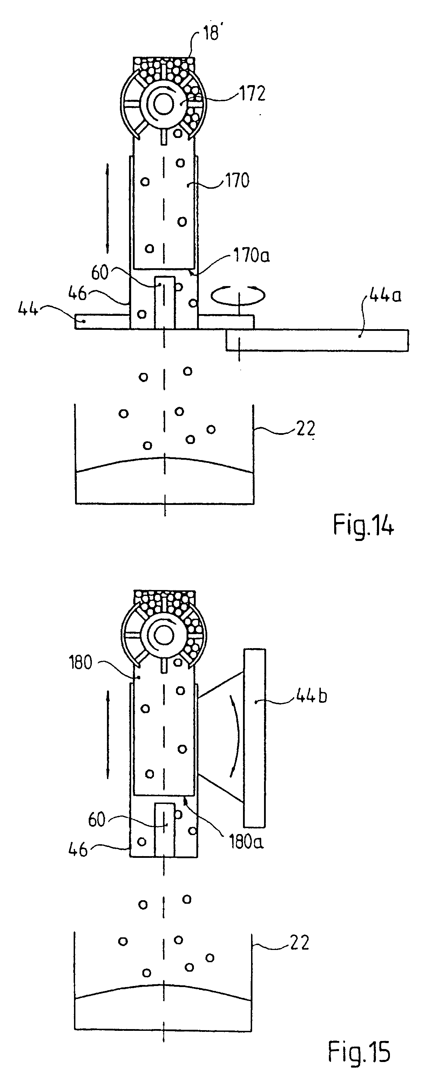

In Fig. 14 ist eine weitere in der Vorrichtung 10 verwendbare Granulatrutsche 170 dargestellt. Die Granulatrutsche 170 ist als Rohr mit kreisrundem Querschnitt ausgebildet und konzentrisch zum Zylinder 22 der Vorrichtung 10 angeordnet. Am Einfüllende der Granulatrutsche 170 ist anstelle der Förderschnecke eine Zellenradschleuse 172 befestigt, die dem Granulatbehälter 12 bei jeder Umdrehung eine vorgegebene Menge Granulat entnimmt. Die Granulatrutsche 170 dient gleichzeitig als Führung für den Kolben 44, dessen Kolbenstange 46 als Hohlprofil mit kreisrundem Querschnitt ausgebildet ist, das auf die Granulatrutsche 170 aufschiebbar ist. Konzentrisch in der Mitte der hohlen Kolbenstange 46 ist die Einstoffdüse 60 befestigt, mit der das Wasser in den Zylinder 22 eingespritzt wird. Um während des Verdichtens und Ausschiebens des Speiseteiges sowohl die Austrittsöffnung 170a der Granulatrutsche 170 als auch die Einstoffdüse 60 zu schützen, ist an der dem Zylinder 22 zugewandten Stirnseite des Kolbens 44 eine schwenkbare Kolbenplatte 44a vorgesehen. Die Kolbenplatte 44a ist an einer seitlich zur Längsachse des Kolbens 44, parallel zu dieser verlaufenden Achse schwenkbar gelagert und kann zwischen einer offenen Betriebsstellung, in der die Austrittsöffnung 170a und die Düse 60 freigegeben ist, und einer geschlossenen Betriebsstellung hin und her geschwenkt werden, in der die Austrittsöffnung 170a und die Düse 60 geschützt sind.

Fig. 15 zeigt eine Abwandlung der in Fig. 14 beschriebenen Granulatrutsche 170. Der Aufbau der Granulatrutsche 180 entspricht im wesentlichen dem Aufbau der Granulatrutsche 170 nach Fig. 14, jedoch mit dem Unterschied, daß die Kolbenplatte 44b, mit der die Austrittsöffnung 180a und die Einstoffdüse 60 geschützt werden, an einer Achse schwenkbar gelagert ist, die quer zur Längsachse des Kolbens 44 liegt.

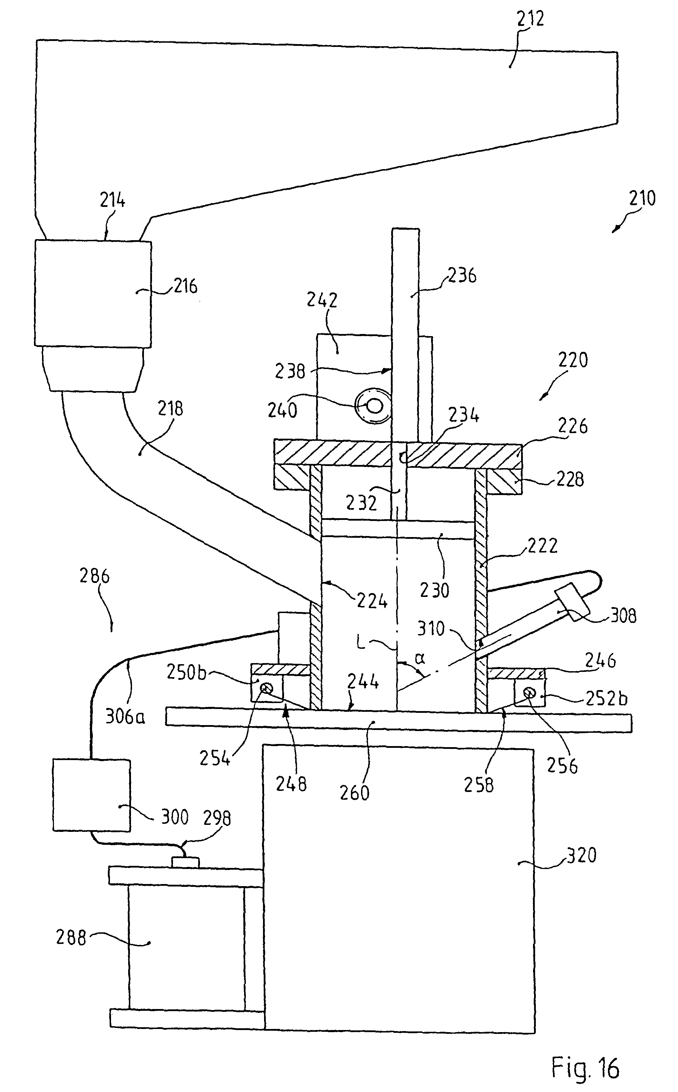

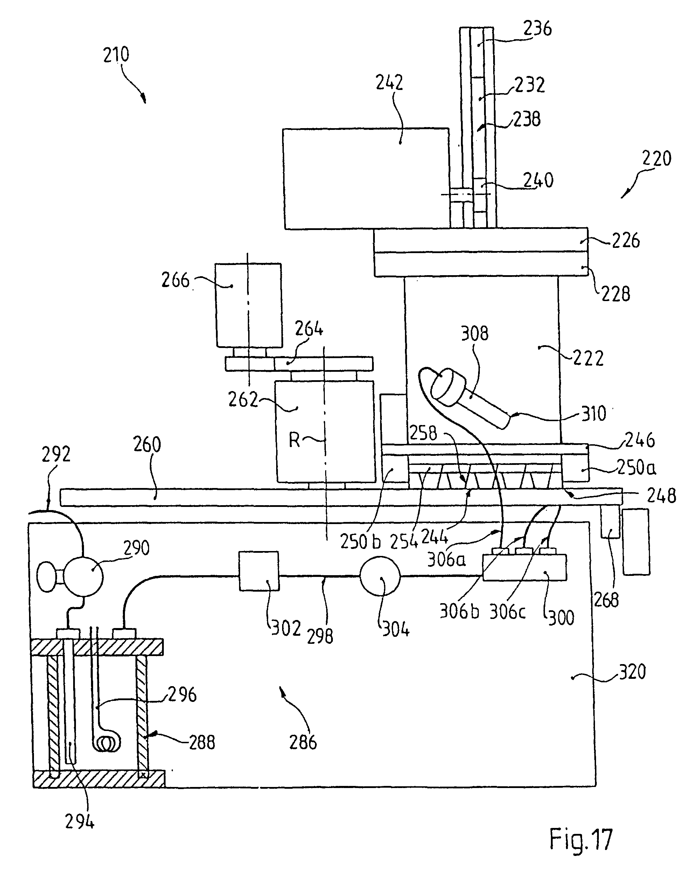

Nachfolgend wird eine weitere Vorrichtung 210 beschrieben, die zur Durchführung des Verfahrens geeignet ist. Die Fig. 16 und 17 zeigen in schematischer Darstellung die Vorrichtung 210, die gleichfalls in einem Verkaufsautomaten für Pommes frites eingesetzt ist. Die Vorrichtung 210 hat einen mit Kartoffelgranulat gefüllten Granulatbehälter 212, der vor Inbetriebnahme des Verkaufsautomaten mit Kartoffelgranulat, das für etwa 100 Portionen ausreicht, gefüllt wird. Am in Fig. 16 links dargestellten unteren Ende des Granulatbehälters 212 ist an einer Austrittsöffnung 214 eine Dosiereinheit 216 befestigt. Die Dosiereinheit 216 steht über eine Granulatrutsche 218 mit einer Kammer 220 in Verbindung.

Die Kammer 220 hat einen senkrecht stehenden, an beiden Enden offenen Hohlzylinder 222 mit kreisförmigem Querschnitt, der in seiner Mantelfläche eine Einfüllöffnung 224 hat, in der die Granulatrutsche 218 endet. An seinem oberen, offenen Ende ist der Zylinder 222 mit einem Deckel 226 verschlossen, der an einem radial abstehenden, umlaufenden Flansch 228 des Zylinders 222 verschraubt ist.

In dem Zylinder 222 ist in Richtung seiner Längsachse L ein Kolben 230 verfahrbar, dessen Kolbenstange 232 durch eine am Deckel 226 ausgebildete Führungsbohrung 234 aus dem Zylinder 222 ragt und in einer am Deckel 226 befestigten, senkrecht nach oben stehenden Führung 236 geführt ist. An der Kolbenstange 232 ist eine Verzahnung 238 ausgebildet, die mit einem Zahnrad 240 eines auf dem Deckel 226 befestigten Kolbenantriebes 242 in Eingriff steht.

Das untere Ende des Zylinders 222 ist offen und dient als Ausschiebeöffnung 244 der Kammer 220 für den fertig gemischten Speiseteig. Etwas oberhalb der Ausschiebeöffnung 244 ist ein radial abstehender, umlaufender zweiter Flansch 246 am Zylinder 222 verschweißt. An diesem zweiten Flansch 246 ist eine Formvorrichtung 248 befestigt. Diese Formvorrichtung 248 hat zwei Paare Halterungen 250a und 250b sowie 252a und 252b. Die Halterungen jedes Paares 250a und 250b bzw. 252a und 252b sind mit Abstand zueinander angeordnet und halten jeweils einen Rundstab 254 bzw. 256. Die Halterungspaare 250a und 250b sowie 252a und 252b sind wiederum derart angeordnet, daß die beiden Rundstäbe 254 und 256 parallel zueinander zu beiden Seiten des Zylinders 222 ausgerichtet sind. Die Rundstäbe 254 und 256 dienen als Spannvorrichtung für einen Draht 258, der über die Ausschiebeöffnung 244 gespannt, an der unteren Stirnfläche des Zylinders 222 anliegt. Dieser Draht 258 ist mehrfach zwischen den beiden Rundstäben 254 und 256 hin und her geführt, wobei die einzelnen Drahtabschnitte im Bereich der Ausschiebeöffnung 244 parallel mit Abstand zueinander angeordnet sind. Die Oberfläche des Drahtes 258 ist mit Teflon beschichtet.

Unter dem Zylinder 222 ist eine Schließplatte 260 angeordnet, die an die Abtriebswelle einer neben dem Zylinder 222 am Gestell (nicht dargestellt) der Vorrichtung 210 befestigten Getriebeeinheit 262 angeschraubt ist. Die Getriebeeinheit 262 steht über ein Zahnradpaar 264 mit einem elektrischen Antrieb 266 im Eingriff. Bei Betätigung des Antriebs 266 wird die Schließplatte 260 über die Getriebeeinheit 262 um die Schwenkachse R der Getriebeeinheit 262 geschwenkt. Um ein Durchbiegen der Schließplatte 260 im Bereich des Zylinders 222 zu verhindern, ist, wie in Fig. 17 rechts dargestellt, am Gehäuse (nicht dargestellt) der Vorrichtung 210 ein Rollenpaar 268 befestigt, das unter Vorspannung an der Unterseite der Schließplatte 260 anliegt und diese gegen die Stirnfläche des Zylinders 222 drückt. Der Aufbau der Schließplatte 260 entspricht dem der in den Fig. 4 und 5 gezeigten Schließplatte 42, so daß auf eine genaue Beschreibung der Schließplatte 260 verzichtet werden kann.

Die Vorrichtung 210 ist ferner mit einer Rehydriereinheit 286 ausgestattet, mit der das für das Mischen des Speiseteiges notwendige Wasser in die Kammer 220 eingespritzt wird. Wie insbesondere in Fig. 17 dargestellt, verwendet die Rehydriereinheit 286 einen Wasserbehälter 288, der über ein Ventil 290 mit einer Frischwasserleitung 292 in Verbindung steht, an der ein Leitungsdruck von etwa 4 bar anliegt. Am Anschluß des Wasserbehälters 288 für die Frischwasserleitung 292 ist im Wasserbehälter 288 ein Filtereinsatz 294 angeordnet, mit dem das in den Wasserbehälter 288 einströmende Frischwasser gereinigt wird.

Das Wasser im Wasserbehälter 288 wird durch eine in den Wasserbehälter 288 ragende Heizwendel 296 auf eine Betriebstemperatur von 85°C erwärmt. Der Wasserbehälter 288 ist über eine Zuführleitung 298 mit einer Verteilerleiste 300 verbunden. In der Zuführleitung 298 sind ein Magnetventil 302 und ein Durchflußmesser 304 angeordnet. Das Magnetventil 302 reguliert die in den Zylinder 222 mit einem Druck von 1,5 bis 2 bar eingespritzte Wassermenge, wobei der Durchflußmesser 304 die Wassermenge bestimmt und das Magnetventil 302 über eine Steuerung (nicht dargestellt) entsprechend einem vorgegebenen Mischungsverhältnis von Speisegranulat und Wasser ansteuert.

Die Verteilerleiste 300 steht über drei Verbindungsleitungen 306a, 306b und 306c mit drei am Zylinder 222 befestigten Einspritzdüsen in Verbindung, von denen in den Fig. 1 und 2 nur die Einspritzdüse 308 dargestellt ist. Die Einspritzdüse 308 ist in eine schräg durch den Mantel des Zylinders 222 verlaufende Aufnahmeöffnung 310 so eingesetzt, daß der aus der Einspritzdüse 308 austretende Wasserstrahl mit einem Winkel von 25° bis 30° zur Normalen der Mantelfläche des Zylinders 222 schräg in den Zylinder 222 eintritt, also entlang einer parallel zur Längsachse L des Zylinders 222 verlaufenden Sekantenebene ausgerichtet ist. Zusätzlich ist, wie in Fig. 1 dargestellt, die Einspritzdüse 308 um einen Winkel α von 15 bis 25° zur Längsachse L des Zylinders 222 geneigt.

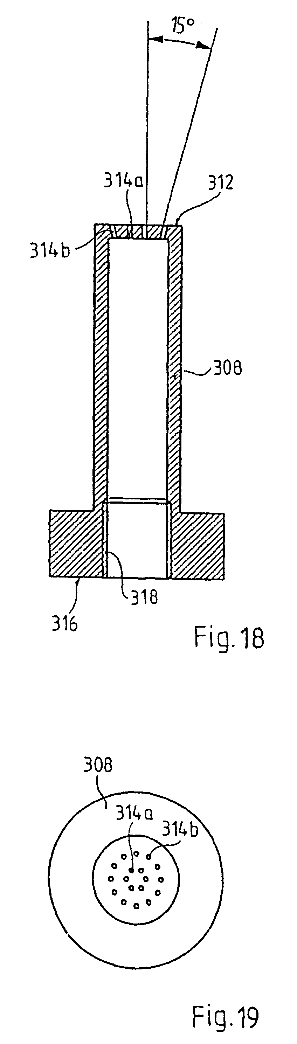

Wie in Fig. 18 dargestellt, hat die Einspritzdüse 308 an ihrer in den Zylinder 222 zeigenden Stirnfläche 312 mehrere Austrittsbohrungen 314a und 314b, die in zwei Gruppen konzentrisch um einen gemeinsamen Mittelpunkt ausgebildet sind (vgl.
Fig. 19). Die Austrittsbohrungen 314b der Gruppe mit größerem Abstand zum Mittelpunkt sind um einen Winkel von 15° zur Stirnfläche 312 der Einspritzdüse 308 geneigt. An der der Stirnfläche 312 abgewandten Anschlußseite 316 der Einspritzdüse 308 ist ein Innengewinde 318 ausgebildet, in das die Verbindungsleitung 306a abgedichtet eingeschraubt ist.

Nachfolgend wird die Funktionsweise der Vorrichtung 210 erläutert. Sobald der Verkaufsautomat beispielsweise durch Einzahlen eines Geldbetrages aktiviert worden ist, entnimmt die Dosiereinheit 216 dem Granulatbehälter 212 eine vorgegebene portionierte Menge Speisegranulat. Die portionierte Menge Speisegranulat gleitet aus der Dosiereinheit 216 entlang der Granulatrutsche 218 über die Einfüllöffnung 224 in den Zylinder 222 der Kammer 220, deren Ausschiebeöffnung 244 durch die Schließplatte 260 verschlossen ist. Zu diesem Zeitpunkt befindet sich der Kolben 230 in der Beschickungsposition, d.h. der Kolben 230 ist so weit nach oben gefahren, daß die Einfüllöffnung 224 freigegeben ist. Nachdem der Zylinder 222 mit Speisegranulat gefüllt ist, wird der Kolbenantrieb 242 betätigt, der den Kolben 230 in die Mischposition fährt, in der unter der Einfüllöffnung 224 angeordnet ist.

Nachdem der Kolben 230 in der Mischposition angekommen ist, gibt das Magnetventil 302 die Zuführleitung 298 frei, so daß Wasser mit einem Druck von 1,5 bis 2 bar über die Einspritzdüsen 308 in den Innenraum des Zylinders 222 eingespritzt wird. Durch die schräge und geneigte Anordnung der Einspritzdüsen 308 wird in dem Zylinder 222 eine Kreisströmung erzeugt, die das Speisegranulat mit sich reißt. Dadurch wird eine Rühr- bzw. Mischbewegung verursacht, durch die das Speisegranulat mit dem auf 80 bis 85°C erhitzten Wasser gleichmäßig durchmischt wird. Während das Wasser über die Zuführleitung 298 in die Einspritzdüsen 308 strömt, mißt der Durchflußmesser 304 die durch die Zuführleitung 298 strömende Wassermenge. Entspricht die bereits in den Zylinder 222 eingespritzte Wassermenge der für ein optimales Mischungsverhältnis notwendigen Wassermenge, sperrt das Magnetventil 302 die Zuführleitung 298.

Ist das Einspritzen über die Einspritzdüsen 308 abgeschlossen, wird der Kolbenantrieb 242 erneut aktiviert, so daß sich der Kolben 230 im Zylinder in eine Verdichtungsposition absenkt, in der der Speiseteig mit einer vorgegebenen Kraft verdichtet wird. Die tatsächlich wirkende Kraft wird bei diesem Vorgang durch Auswertung des Motorstromes des Kolbenantriebes 242 gemessen, der den Kolben 230 bei Erreichen der vorgegebenen Kraft in der Verdichtungsposition hält.

Nachdem das Verdichten abgeschlossen ist, wird das Teigausschieben und Teigschneiden gestartet, das dem der ersten Ausführungsform entspricht. Die geschnittenen Teigstreifen, die die rohen Pommes frites bilden, fallen in eine unter dem Zylinder 222 angeordnete Friteuse 320, in der sie fritiert werden.

Das Teigausschieben und Teigschneiden wird so lange wiederholt, bis der Kolben 230 seine Endposition erreicht, in der er an dem über die Ausschiebeöffnung 244 gespannten Draht 258 anliegt. Anschließend wird der Kolben 230 wieder in die Beschickungsposition zurückgefahren und die Schließplatte 260 wieder in ihre Ausgangsstellung geschwenkt, in der sie die Ausschiebeöffnung 244 verschließt. Zwischenzeitlich werden die Pommes frites in der Friteuse 320 fertig gegart, anschließend der Friteuse 320 entnommen und über eine Ausgabeeinheit (nicht dargestellt) ausgegeben.

Bei den in Fig. 1 bis 3 und in Fig. 16 bis 19 dargestellten Vorrichtungen können die verschiedenen Einheiten auch gegeneinander ausgetauscht werden. So ist ein Einsatz der in Fig. 10 bis 13 gezeigten Granulatrutschen auch bei der in Fig. 16 bis 19 gezeigten Vorrichtung denkbar, und die Formvorrichtung 248 aus Fig. 16 und 17 kann in der Vorrichtung nach Fig. 1 und 2 Anwendung finden.

## Patentansprüche

1. Verfahren zum Rehydrieren einer vorgegebenen Menge Speisegranulat mit einer vorgegebenen Menge Wasser, das in einer Kammer auf das in diese eingebrachte Speisegranulat gesprüht wird, wonach das Speisegranulat/Wasser-Gemisch in der Kammer (20, 220) verdichtet und aus ihr ausgegeben wird, **gekennzeichnet durch** die Folge der Schritte vor dem Verdichten:
a) es wird in die Kammer (20, 220) eine erste Teilmenge des Speisegranulats eingebracht, die eine erste Schicht bildet,
b) auf die erste Schicht wird eine erste Teilmenge Wasser gesprüht, die so bemessen ist, daß sich in den oberen Bereichen der ersten Schicht Wasser sammelt,
c) mindestens eine weitere Teilmenge oder die Restmenge des Speisegranulats wird in die Kammer (20, 220) eingebracht und mit einer weiteren Teilmenge oder der Restmenge des Wassers besprüht.

2. Verfahren nach Anspruch 1, **dadurch gekennzeichnet, daß** die jeweilige weitere Teilmenge oder die Restmenge des Speisegranulats nach Ausbilden einer über der ersten Schicht liegenden weiteren Schicht mit der Teilmenge bzw. der Restmenge des Wassers besprüht wird.

3. Verfahren nach Anspruch 1, **dadurch gekennzeichnet, daß** das in Schritt c) eingebrachte Speisegranulat während seines Einbringens mit Wasser besprüht wird.

4. Verfahren nach Anspruch 2 oder 3, **dadurch gekennzeichnet, daß** auf die erste Granulatschicht nur eine weitere Granulatschicht aufgebracht wird, bis die vorgegebene Menge Speisegranulat erreicht ist.

5. Verfahren nach einem der Ansprüche 1 bis 4, **dadurch gekennzeichnet, daß** das Wasser zumindest teilweise in Richtung normal zum Kammerboden eingespritzt wird.

6. Verfahren nach einem der Ansprüche 1 bis 4, **dadurch gekennzeichnet, daß** das Wasser zumindest teilweise längs mindestens einer Tangentialebene an einem imaginären, in der Kammer (220) stehenden Zylinder in eine Richtung eingespritzt wird, die geneigt zur Normalen des Kammerbodens verläuft.

7. Verfahren nach einem der vorhergehenden Ansprüche, **dadurch gekennzeichnet, daß** das Wasser als Sprühregen aufgesprüht wird, dessen Tröpfchen bei einem mittleren Wasserdruck von 2 bis 3 bar einen mittleren volumetrischen Durchmesser von 0,5 bis 1,5 mm, vorzugsweise von 1 mm haben.

8. Vorrichtung zum Durchführen des Verfahrens nach einem der Ansprüche 1 bis 7, mit einer Kammer (20), mit Mitteln (18) zum wiederholten Einfüllen des Speisegranulats in die Kammer (20) derart, daß sich auf dem Kammerboden übereinander liegende Speisegranulatschichten bilden, mit einer beabstandet zum Kammerboden in der Kammer (20) angeordneten Düse (60) zum Einbringen von Wasser in die Kammer (20) auf die jeweilige Speisegranulatschicht, wobei die Düse (60) einen sich in Strömungsrichtung verjüngenden Hohlraum hat und ihre mit dem Hohlraum verbundene, in Richtung zum Kammerboden zeigende Düsenaustrittsöffnung eine im Querschnitt spitzwinklige Abrißkante zum Zerstäuben des ausströmenden Wassers hat, mit einer Vorrichtung (44) zum Verdichten des in der Kammer gebildeten Speisegranulat/Wasser-Gemisches, und mit einer Ausschiebeöffnung (80) im Kammerboden zum Ausgeben des verdichteten Speisegranulat/Wasser-Gemisches.

9. Vorrichtung nach Anspruch 8, **dadurch gekennzeichnet, daß** die Düse eine Einstoffdüse (60) ist, in deren Hohlraum ein Dralleinsatz angeordnet ist, der eine axial verlaufende Bohrung und mehrere radial verlaufende Kanäle hat, durch die das Wasser in den Hohlraum kreisförmig einströmt.

10. Vorrichtung nach Anspruch 8, **dadurch gekennzeichnet, daß** die Düse (60) eine Mehrstoffdüse ist, die eine konzentrisch zur Düsenaustrittsöffnung für das Wasser angeordnete zweite Düsenaustrittsöffnung für ein unter Druck zugeführtes zweites Medium, vorzugsweise Preßluft und/oder Wasserdampf, hat.

11. Vorrichtung nach Anspruch 7, 8 oder 9, **dadurch gekennzeichnet, daß** die Kammer (20) ein Zylinder (22) mit symmetrischer, vorzugsweise kreisförmiger Querschnittsform ist, und daß die Düse (60) zentrisch im Zylinder (22) angeordnet ist und das Wasser in Richtung der Längsachse des Zylinders (22) einspritzt.

12. Vorrichtung nach Anspruch 11, **dadurch gekennzeichnet, daß** die Düse (60) an einem in Längsrichtung des Zylinders (22) verschieblichen Kolben (44), vorzugsweise in einer Vertiefung an der Kolbenstirnfläche, befestigt ist.

13. Vorrichtung zum Durchführen des Verfahrens nach einem der Ansprüche 1 bis 7, mit einer Kammer (220), mit Mitteln (218) zum wiederholten Einfüllen des Speisegranulats in die Kammer (220) derart, daß sich auf dem Kammerboden übereinander liegende Speisegranulatschichten bilden, mit einer beabstandet zum Kammerboden in der Kammer (220) angeordneten Düse (308) zum Einbringen von Wasser in die Kammer (220) auf die jeweilige Speisegranulatschicht, wobei die Düse (308) derart angeordnet ist, daß das Wasser längs einer Tangentialebene an einem imaginären, in der Kammer angeordneten Zylinder eingespritzt wird, mit einer Vorrichtung (230) zum Verdichten des in der Kammer gebildeten Speisegranulat/Wasser-Gemisches, und mit einer Ausschiebeöffnung (244) im Kammerboden zum Ausgeben des verdichteten Speisegranulat/Wasser-Gemisches.

14. Vorrichtung nach Anspruch 13, **dadurch gekennzeichnet, daß** das Wasser an mindestens zwei Stellen in die Kammer (220) eingespritzt wird, die in einer gemeinsamen radialen Ebene der Kammer, vorzugsweise gleichmäßig über den Querschnitt der Kammer (220) verteilt, angeordnet sind.

15. Vorrichtung nach Anspruch 13, **dadurch gekennzeichnet, daß** das Wasser an mindestens zwei Stellen in die Kammer (220) eingespritzt wird, die in unterschiedlichen radialen Ebenen der Kammer (220) angeordnet sind.

16. Vorrichtung nach Anspruch 13, 14 oder 15, **dadurch gekennzeichnet, daß** das Wasser zur Längsachse (L) der Kammer (220) geneigt eingespritzt wird.

17. Vorrichtung nach einem der Ansprüche 8 bis 16, **dadurch gekennzeichnet, daß** zum Einfüllen des Speisegranulats seitlich an der Kammer (20) eine Rutsche (18) angeordnet ist, die in einer an der Kammer ausgebildeten Einfüllöffnung (24) mündet.

18. Vorrichtung nach Anspruch 17, **dadurch gekennzeichnet, daß** die Rutsche (18) mit einem Winkel von 10 bis 20° zur Längsachse der Kammer (20) geneigt angeordnet ist.

19. Vorrichtung nach Anspruch 17, **dadurch gekennzeichnet, daß** die Rutsche (18) einen Beruhigungsabschnitt (x) und einen sich daran anschließenden, mit einem Winkel von 40 bis 60° zum Beruhigungsabschnitt (x) geneigt verlaufenden Beschleunigungsabschnitt (y) hat, der in einen parallel zum Beruhigungsabschnitt (x) verlaufenden, in der Einfüllöffnung (24) mündenden Führungsabschnitt (z) übergeht.

20. Vorrichtung nach Anspruch 17, 18 oder 19, **dadurch gekennzeichnet, daß** in der Rutsche (18) ein in den Rutschenquerschnitt ragendes Prallblech (18b) zum Abbremsen des Speisegranulats angeordnet ist.

21. Vorrichtung nach einem der Ansprüche 8 bis 16, **dadurch gekennzeichnet, daß** zum Einfüllen des Speisegranulats eine in die Kammer (22) schwenkbare Rutsche (160) dient, in deren Austrittsöffnung (160a) die Düse (60) zentrisch angeordnet ist.

22. Vorrichtung nach einem der Ansprüche 8 bis 21, **gekennzeichnet durch** eine Fördereinrichtung (16, 216), die das Speisegranulat aus einem Granulatbehälter (12, 212) in die Kammer (20, 220) transportiert und deren Förderleistung über eine Steuerung (74) an die einzuspritzende Wassermenge angepaßt ist.

23. Vorrichtung nach einem der Ansprüche 12 bis 22, **dadurch gekennzeichnet, daß** die Kammer (20, 220) ein Zylinder (22, 222) mit kreisförmigem Querschnitt ist, und daß der Kolben (44, 230) einen Drehantrieb hat, der ihn um seine Längsachse drehen kann, wobei an der Unterseite des Kolbens (44, 230) vorzugsweise Erhebungen ausgebildet sind.

24. Vorrichtung nach Anspruch 8, **dadurch gekennzeichnet, daß** an der Kammer (20, 220) mindestens eine Heizvorrichtung (94a, 94b, 94c) vorgesehen ist.

25. Vorrichtung nach Anspruch 24, **dadurch gekennzeichnet, daß** zum Verschluß einer Ausschiebeöffnung (80, 244) der Kammer (20, 220) eine außerhalb der Kammer (20, 220) gelagerte Schließplatte (42, 260) vorgesehen ist, die in der Plattenebene verschwenkbar oder verschiebbar oder als Klappe ausgebildet ist.

26. Vorrichtung nach Anspruch 25, **dadurch gekennzeichnet, daß** die Schließplatte (42, 260) eine Heizung (104) hat.

27. Vorrichtung nach Anspruch 25 oder 26, **dadurch gekennzeichnet, daß** ein Teigschneider (108) gemeinsam mit der Schließplatte (42, 260) durch den Bereich der Ausschiebeöffnung (80, 244) schwenkbar ist.

28. Vorrichtung nach Anspruch 27, **dadurch gekennzeichnet, daß** der Teigschneider ein Draht (108) ist, der zwischen einer an der Schwenkachse (R) angeordneten Nabe (96) und einem äußeien Randabschnitt (110) der Schließplatte (42, 260) gespannt ist.

29. Vorrichtung nach Anspruch 27, **dadurch gekennzeichnet, daß** der Teigschneider eine radial von einer an der Schwenkachse (R) angeordneten Nabe (96) der Schließplatte (42, 260) abstehende Messerschneide ist.

30. Vorrichtung nach Anspruch 27, **dadurch gekennzeichnet, daß** der Teigschneider eine an der Umlaufkante der Schließplatte (42, 260) ausgebildete Messerschneide ist.

## Claims

1. A method for rehydrating a predetermined quantity of food granules with a predetermined quantity of water that is sprayed onto the food granules fed into a chamber, whereupon the food granule/water mixture is compacted in the chamber (20, 220) and discharged therefrom, **characterized by** the sequence of steps before compaction:
a) a first portion of food granules forming a first layer is fed into the chamber (20, 220),
b) a first portion of water is sprayed onto the first layer, said first portion of water being dimensioned such that water accumulates in the upper regions of the first layer,
c) at least one further portion or the remainder of the food granules is fed into the chamber (20, 220) and sprayed with a further portion or the remainder of the water.

2. The method according to claim 1, **characterized in that** the respective further portion or the remainder of the food granules is sprayed with the portion or the remainder of water after a further layer overlying the first layer has been formed.

3. The method according to claim 1, **characterized in that** the food granules fed in step c) are sprayed with water while being fed.

4. The method according to claim 2 or 3, **characterized in that** only one further layer of granules is deposited on the first layer of granules until the predetermined quantity of food granules is reached.

5. The method according to one of claims 1 to 4, **characterized in that** the water is sprayed in at least partially in a direction normal to the bottom of the chamber.

6. The method according to one of claims 1 to 4, **characterized in that** the water is sprayed in at least partially along at least one tangential plane to an imaginary cylinder standing in the chamber (220), in a direction being oblique to the normal of the bottom of the chamber.

7. The method according to one of the preceding claims, **characterized in that** the water is sprayed on as a fine shower, the droplets of which have a mean volumetric diameter of 0.5 to 1.5 mm, preferably 1 mm, at a mean water pressure of 2 to 3 bar.

8. A device for performing the method according to one of claims 1 to 7, having a chamber (20), means (18) for repeatedly feeding the food granules into the chamber (20) in such a manner that overlying layers of food granules form on the bottom of the chamber, a nozzle (60) that is arranged at a distance from the bottom of the chamber (20) for feeding water into the chamber (20) on the respective layer of food granules, wherein the nozzle (60) has a cavity that tapers in the direction of flow, and its nozzle outlet opening, which is connected to the cavity and points in the direction of the bottom of the chamber, has a separation edge that is acute-angled in cross section so as to atomize the water flowing out, a device (44) for compacting the food granule/water mixture formed in the chamber, and a discharge opening (80) in the bottom of the chamber for discharging the compacted food granule/water mixture.

9. The device according to claim 8, **characterized in that** the nozzle is a single-substance nozzle (60), in the cavity of which a swirl insert is arranged that has an axially extending hole and a plurality of radially extending passages through which the water circularly flows into the cavity.

10. The device according to claim 8, **characterized in that** the nozzle (60) is a multi-substance nozzle that has a second nozzle outlet opening, which is arranged concentrically to the nozzle outlet opening for the water, for a second medium, preferably compressed air and/or steam, supplied under pressure.

11. The device according to claim 7, 8 or 9, **characterized in that** the chamber (20) is a cylinder (22) with a symmetrical, preferably circular cross-sectional shape, and that the nozzle (60) is centrally arranged in the cylinder (22) and sprays in the water in the direction of the longitudinal axis of the cylinder (22).

12. The device according to claim 11, **characterized in that** the nozzle (60) is attached to a piston (44) that can be displaced in a longitudinal direction of the cylinder (22), preferably in a depression at the pistion end face.

13. A device for performing the method according to one of claims 1 to 7, having a chamber (220), means (218) for repeatedly feeding the food granules into the chamber (220) in such a manner that overlying layers of food granules form on the bottom of the chamber, a nozzle (308) that is arranged at a distance from the bottom of the chamber (220) for feeding water into the chamber (220) on the respective layer of food granules, wherein the nozzle (308) is arranged in such a manner that the water is sprayed in along a tangential plane to an imaginary cylinder arranged in the chamber, a device (230) for compacting the food granule/water mixture formed in the chamber, and a discharge opening (244) in the bottom of the chamber for discharging the compacted food granule/water mixture.

14. The device according to claim 13, **characterized in that** the water is sprayed into the chamber (220) at at least two points that are arranged in different radial planes of the chamber (220), preferably distributed uniformly over the cross section of the chamber (220).

15. The device according to claim 13, **characterized in that** the water is sprayed into the chamber (220) at at least two points that are arranged in a common radial plane of the chamber.

16. The device according to claim 13, 14 or 15, **characterized in that** the water is sprayed in obliquely to the longitudinal axis (L) of the chamber (220).

17. The device according to one of claims 8 to 16, **characterized in that** a chute (18), which opens into a feed opening (24) formed in the chamber, is arranged laterally on the chamber (20) for feeding in the food granules.

18. The device according to claim 17, **characterized in that** the chute (18) is arranged obliquely to the longitudinal axis of the chamber (20) at an angle of 10 to 20°.

19. The device according to claim 17, **characterized in that** the chute (18) has a calming section (x) and an adjoining acceleration section (y) that extends obliquely to the calming section (x) at an angle of 40 to 60° and that merges into a guide section (z) being parallel to the calming section (x) and opening into the feed opening (24).

20. The device according to claim 17, 18 or 19, **characterized in that** a baffle (18b) projecting into the cross section of the chute is arranged in the chute (18) to slow down the food granules.

21. The device according to one of claims 8 to 16, **characterized in that** a chute (160), which can be pivoted into the chamber (22), is used to feed the food granules into the chamber (22), the nozzle (60) being centrally arranged in the outlet opening of the chute (160).

22. The device according to one of claims 8 to 21, **characterized by** a feed device (16, 216) that transports the food granules from a granule hopper (12, 212) into the chamber (20, 220) and whose feed rate is adapted to the quantity of water to be sprayed in by means of a control device (74).

23. The device according to one of claims 12 to 22, **characterized in that** the chamber (20, 220) is a cylinder (22, 222) with a circular cross section, and that the piston (44, 230) has a rotary drive that can rotate the piston (44, 230) about its longitudinal axis, wherein preferably raised portions are formed on the underside of the piston (44, 230).

24. The device according to claim 8, **characterized in that** at least one heating device (94a, 94b, 94c) is provided on the chamber (20, 220).

25. The device according to claim 24, **characterized in that** a closing plate (42, 260), which is supported outside the chamber (20, 220) and is pivotable or slidable in the plane of the plate, or formed as a flap, is provided to close a discharge opening (80, 244) of the chamber (20, 220).

26. The device according to claim 25, **characterized in that** the closing plate (42, 260) has a heating (104).

27. The device according to claim 25 or 26, **characterized in that** a dough cutter (108) is pivotable through the area of the discharge opening (80, 244) together with the closing plate (42, 260).

28. The device according to claim 27, **characterized in that** the dough cutter (108) is a wire (108) that is stretchted between a hub (96) arranged on the pivoting axis (R) and an outer edge portion (110) of the closing plate (42, 260).

29. The device according to claim 27, **characterized in that** the dough cutter is a cutter blade projecting radially from a hub (96) of the closing plate (42, 260), said hub (96) being arranged on the pivoting axis (R).

30. The device according to claim 27, **characterized in that** the dough cutter is a cutter blade formed on the peripheral edge of the closing plate (42, 260).

## Revendications

1. Procédé pour réhydrater une quantité prédéterminée de granulat alimentaire avec une quantité prédéterminée d'eau qui est aspergée dans une chambre sur le granulat d'alimentation introduit dans ladite chambre, après quoi le mélange granulat d'alimentation/eau est compacté dans la chambre (20, 220) et est retiré de ladite chambre, **caractérisé par** la série d'étapes suivantes intervenant avant compactage :
a) une première quantité partielle de granulat d'alimentation, qui forme une première couche, est introduite dans la chambre (20, 220),
b) une première quantité partielle d'eau, qui est dimensionnée de façon à ce que de l'eau s'accumule dans les régions supérieures de la première couche, est aspergée sur la première couche,
c) au moins une autre quantité partielle ou la quantité restante de granulat d'alimentation est introduite dans la chambre (20, 220) et est aspergée avec une autre quantité partielle ou la quantité restante d'eau.

2. Procédé selon la revendication 1, **caractérisé en ce que** l'autre quantité partielle respective ou la quantité restante de granulat d'alimentation est aspergée avec la quantité partielle resp. la quantité restante d'eau après formation d'une autre couche au-dessus de la première couche.

3. Procédé selon la revendication 1, **caractérisé en ce que** le granulat d'alimentation introduit à l'étape c) est aspergé avec de l'eau pendant son introduction.

4. Procédé selon la revendication 2 ou 3, **caractérisé en ce qu'**une seule autre couche de granulat est appliquée sur la première couche de granulat jusqu'à ce que la quantité prédéterminée de granulat d'alimentation soit atteinte.

5. Procédé selon l'une des revendications 1 à 4, **caractérisé en ce que** l'eau est projetée au moins en partie dans une direction qui est perpendiculaire au fond de la chambre.

6. Procédé selon l'une des revendications 1 à 4, **caractérisé en ce que** l'eau est projetée au moins en partie le long d'au moins un plan tangentiel à un cylindre imaginaire situé dans la chambre (220), dans une direction qui est inclinée par rapport à la perpendiculaire au fond de la chambre.

7. Procédé selon l'une des revendications précédentes, **caractérisé en ce que** l'eau est aspergée en pluie dont les gouttelettes ont un diamètre volumétrique moyen compris entre 0,5 et 1,5 mm, avantageusement de 1 mm, à une pression moyenne comprise entre 2 et 3 bars.

8. Dispositif destiné à mettre en oeuvre le procédé selon l'une des revendications 1 à 7, lequel dispositif comprend :
une chambre (20),
des moyens (18) destinés à introduire de façon répétée le granulat d'alimentation dans la chambre (20) de façon à former sur le fond de la chambre des couches superposées de granulat d'alimentation,
une buse (60) agencée dans la chambre (20) à distance du fond de ladite chambre, et destinée à introduire de l'eau dans la chambre (20) sur la couche de granulat d'alimentation concernée, la buse (60) comportant un espace creux s'amincissant dans le sens de l'écoulement et son ouverture de sortie, reliée à l'espace creux et pointant en direction du fond de la chambre, présentant une arête de dispersion à angle vif en coupe transversale destinée à disperser l'eau sortante,
un dispositif (44) destiné à compacter le mélange granulat d'alimentation/eau formé dans la chambre, et
une ouverture d'éjection (80) ménagée dans le fond de la chambre et destinée à délivrer le mélange granulat d'alimentation/eau compacté.

9. Dispositif selon la revendication 8, **caractérisé en ce que** la buse est une buse à matière unique (60) dont l'espace creux inclut une pièce intérieure de torsion qui comporte un perçage s'étendant axialement et plusieurs canaux s'étendant radialement, permettant à l'eau d'entrer circulairement dans l'espace creux.

10. Dispositif selon la revendication 8, **caractérisé en ce que** la buse (60) est une buse à matières multiples qui comporte une deuxième ouverture de sortie de buse qui est agencée concentriquement à l'ouverture de sortie de buse destinée à l'eau, et qui est destinée à un deuxième médium amené sous pression, de préférence de l'air comprimé et/ou de la vapeur d'eau.

11. Dispositif selon la revendication 7, 8 ou 9, **caractérisé en ce que** la chambre (20) est un cylindre (22) de section symétrique, avantageusement circulaire, et **en ce que** la buse (60) est agencée au centre du cylindre (22) et l'eau est projetée dans la direction de l'axe longitudinal du cylindre (22).

12. Dispositif selon la revendication 11, **caractérisé en ce que** la buse (60) est fixée à un piston (44), avantageusement dans un creux ménagé à la surface frontale du piston, lequel piston est mobile dans la direction longitudinale du cylindre (22) .

13. Dispositif destiné à mettre en oeuvre le procédé selon l'une des revendications 1 à 7, lequel dispositif comprend :
une chambre (220) ,
des moyens (218) destinés à introduire de façon répétée le granulat d'alimentation dans la chambre (220) de façon à former sur le fond de la chambre des couches superposées de granulat d'alimentation,
une buse (308) agencée dans la chambre (220) à distance du fond de ladite chambre, et destinée à introduire de l'eau dans la chambre (220) sur la couche de granulat d'alimentation concernée, la buse (308) étant agencée de telle sorte que l'eau est aspergée le long d'un plan tangentiel à un cylindre imaginaire situé dans la chambre,
un dispositif (230) destiné à compacter le mélange granulat d'alimentation/eau formé dans la chambre, et
une ouverture d'éjection (244) ménagée dans le fond de la chambre et destinée à délivrer le mélange granulat d'alimentation/eau compacté.

14. Dispositif selon la revendication 13, **caractérisé en ce que** l'eau est projetée dans la chambre (220) en au moins deux endroits qui sont situés dans un plan commun radial de la chambre, en étant avantageusement répartis régulièrement sur la section de la chambre (220).

15. Dispositif selon la revendication 13, **caractérisé en ce que** l'eau est projetée dans la chambre (220) en au moins deux endroits qui sont situés dans des plans radiaux différents de la chambre (220).

16. Dispositif selon la revendication 13, 14 ou 15, **caractérisé en ce que** l'eau est projetée de façon inclinée par rapport à l'axe longitudinal (L) de la chambre (220).

17. Dispositif selon l'une des revendications 8 à 16, **caractérisé en ce qu'**il est prévu latéralement à la chambre (20) une goulotte (18), débouchant dans une ouverture d'introduction (24) conformée au niveau de la chambre, en vue d'introduire le granulat d'alimentation.

18. Dispositif selon la revendication 17, **caractérisé en ce que** la goulotte (18) est agencée en étant inclinée selon un angle compris entre 10° et 20° par rapport à l'axe longitudinal de la chambre (20).

19. Dispositif selon la revendication 17, **caractérisé en ce que** la goulotte (18) comporte une section de stabilisation (x) et une section d'accélération (y) se raccordant à la précédente et s'étendant en étant inclinée selon un angle compris entre 40° et 60° par rapport à la section de stabilisation (x), ladite section d'accélération convergeant vers une section de guidage (z) s'étendant parallèlement à la section de stabilisation (x) et débouchant dans l'ouverture d'introduction (24).

20. Dispositif selon la revendication 17, 18 ou 19, **caractérisé en ce qu'**il est prévu dans la goulotte (18) une tôle de déviation (18b), saillant dans la section de la goulotte, en vue de freiner le granulat d'alimentation.

21. Dispositif selon l'une des revendications 8 à 16, **caractérisé en ce qu'**une goulotte (160), montée pivotante dans la chambre (22), sert à introduire le granulat d'alimentation, la buse (60) étant située au centre dans l'ouverture de sortie (160a) de ladite goulotte.

22. Dispositif selon l'une des revendications 8 à 21, **caractérisé par** un dispositif d'alimentation (16, 216), qui transporte le granulat d'alimentation d'un réservoir de granulat (12, 212) dans la chambre (20, 220), et dont la capacité de transport est adaptée via une commande (74) à la quantité d'eau à injecter.

23. Dispositif selon l'une des revendications 12 à 22, **caractérisé en ce que** la chambre (20, 220) est un cylindre (22, 222) de section circulaire, et **en ce que** le piston (44, 230) comporte un entraînement en rotation qui peut faire tourner ledit piston autour de son axe longitudinal, des saillies étant avantageusement conformées sur la face inférieure du piston (44, 230).

24. Dispositif selon la revendication 8, **caractérisé en ce qu'**il est prévu au moins un dispositif de chauffage (94a, 94b, 94c) au niveau de la chambre (20, 220).

25. Dispositif selon la revendication 24, **caractérisé en ce qu'**il est prévu une plaque de fermeture (42, 260), montée à l'extérieur de la chambre (20, 220) et destinée à fermer une ouverture d'éjection (80, 244) de la chambre (20, 220), laquelle plaque de fermeture est apte à pivoter, ou à se déplacer en translation dans le plan de la plaque, ou bien est conformée en volet.

26. Dispositif selon la revendication 25, **caractérisé en ce que** la plaque de fermeture (42, 260) comporte un dispositif de chauffage (104).

27. Dispositif selon la revendication 25 ou 26, **caractérisé en ce qu'**un dispositif de découpage de pâte (108) est apte à pivoter conjointement avec la plaque de fermeture (42, 260) au travers de la région de l'ouverture d'éjection (80, 244).

28. Dispositif selon la revendication 27, **caractérisé en ce que** le dispositif de découpage de pâte est un fil (108) qui est tendu entre un moyeu (96) disposé sur l'axe de pivotement (R) et une partie marginale extérieure (110) de la plaque de fermeture (42, 260).

29. Dispositif selon la revendication 27, **caractérisé en ce que** le dispositif de découpage de pâte est un couteau qui fait saillie radialement d'un moyeu (96), situé sur l'axe de pivotement (R), de la plaque de fermeture (42, 260).

30. Dispositif selon la revendication 27, **caractérisé en ce que** le dispositif de découpage est un couteau conformé au niveau de l'arête périphérique de la plaque de fermeture (42, 260).
